# EUROPÄISCHE PATENTSCHRIFT

(11) **EP 4 230 369 B1**
(45) Veröffentlichungstag und Bekanntmachung des Hinweises auf die Patenterteilung: **26.06.2024**
(21) Anmeldenummer: 22157801.6
(22) Anmeldetag: 21.02.2022
(51) Int. Cl.: B27B 5/065, B27B 31/08, B23D 47/02, B23D 47/04

(54) **PLATTENAUFTEILANLAGE**
PANEL CUTTING SYSTEM
INSTALLATION DE DÉCOUPE DE PANNEAUX

(43) Veröffentlichungstag der Anmeldung: 23.08.2023
(73) Patentinhaber: IMA Schelling Austria GmbH, 6858 Schwarzach (AT)
(72) Erfinder: Walch, Alexander, 6700 Bludenz (AT)
(74) Vertreter: Torggler & Hofmann Patentanwälte - Rankweil

(56) Entgegenhaltungen:
- DE-A1-102013 008 368
- DE-T2- 69 016 921
- DE-U1-202010 004 119
- US-A- 5 176 056

## Beschreibung

Die vorliegende Erfindung betrifft eine Plattenaufteilanlage gemäß dem Oberbegriff des Patentanspruchs 1.

Eine gattungsgemäße Plattenaufteilanlage ist aus der DE 690 16 921 T2 bekannt.

Solche Plattenaufteilanlagen teilen großformatige Werkstücke in kleinformatigere Werkstückteile auf. Dabei entstehen in der Regel auch Abfallstücke. Bei den Werkstücken kann es sich um Einzelplatten aber auch um Plattenstapel handeln. Die Platten können z.B. aus Holz, Metall, Kunststoff oder auch aus Verbundwerkstoffen bestehen. Mit den

Plattenaufteilanlagen werden vorher generierte Schnittpläne mit hohen Taktgeschwindigkeiten abgearbeitet. Für die Leistung der Plattenaufteilanlage ist aber wesentlich, dass nicht nur die Aufteil- bzw. Sägevorgänge mit hoher Geschwindigkeit erfolgen, sondern auch das gesamte Materialhandling. Das Zuführen der Werkstücke zur Sägelinie und das Abführen von Werkstückteilen und Abfallstücken von der Sägelinie weg sollte möglichst geringe Stillstandszeiten der Säge verursachen. Hierzu wird angestrebt, diese Vorgänge gleichzeitig mit einem Sägevorgang durchzuführen oder falls dies nicht möglich ist, zumindest möglichst schnell ablaufen zu lassen. Zusätzlich ist es wichtig, dass das Materialhandling, also insbesondere der Ab- und Weitertransport der Werkstückteile und der Abfallstücke möglichst prozesssicher erfolgt, um Stillstandszeiten durch Störungen zu vermeiden.

Aufgabe der Erfindung ist es, eine Plattenaufteilanlage gemäß des Oberbegriffs des Patentanspruchs 1 dahingehend zu verbessern, dass ein sehr effizientes und prozesssicheres Abführen von Werkstückteilen und Abfallstücken von der Sägelinie weg möglich ist.

Zur Lösung in dieser Aufgabe schlägt die Erfindung eine Plattenaufteilanlage gemäß Patentanspruch 1 vor.

Es ist bei der Erfindung somit vorgesehen, dass sich die nutförmigen Kanäle im Werkstückauflagetisch vom Abführbereich, die Sägelinie kreuzend, bis in den Zuführbereich erstrecken und die Finger in den nutförmigen Kanälen vom Abführbereich, die Sägelinie kreuzend, bis in den Zuführbereich verfahrbar sind.

Durch die Erfindung wird es also möglich, dass die gabelartige Abtransportvorrichtung mit ihren Fingern über die Sägelinie hinweg auch in den Zuführbereich eingreifen kann. Es wird also möglich, auch Werkstückteile und/oder Abfallstücke mit der gabelartigen Abtransportvorrichtung aus dem Zuführbereich vor der Sägelinie heraus zu befördern. Vor allem ermöglicht es die Erfindung aber, dass die Finger der gabelartigen Abtransportvorrichtung über die Sägelinie hinweg so weit unter dem direkt an der Sägelinie liegenden Werkstückteil und/oder Abfallstück hindurchgefahren werden kann, sodass das Werkstückteil und/oder Abfallstück beim Anheben der Finger sicher auf den Fingern der gabelartigen Abtransportvorrichtung zu liegen kommen. Dies ermöglicht einen effizienten und prozesssicheren Abtransport von Werkstückteilen und/oder Abfallstücken. Dies gilt vor allem auch dann, wenn es sich um sehr schmale Werkstückteile und/oder Abfallstücke handelt, welche z.B. mit beim Stand der Technik bekannten Vakuumgreifern oder dergleichen nur schwer oder gar nicht prozesssicher und effizient aufgenommen und abgeführt werden können. Ein weiterer Vorteil, insbesondere bei sehr schmalen Werkstückteilen und Abfallstücken, ist, dass mittels der Erfindung auch sicher verhindert werden kann, dass die sehr schmalen Werkstückteile und/oder Abfallstücke aus Versehen in den Schnittspalt der Sägelinie hineinfallen oder sich dort verhaken oder verkanten.

Die gabelartige Abtransportvorrichtung kann dazu eingesetzt werden, um alle Werkstückteile und/oder Abfallstücke, welche beim Zersägen des Werkstücks entstehen, abzutransportieren. Genauso gut ist es aber auch möglich, nur Teilmengen dieser Werkstückteile und/oder Abfallstücke mittels der gabelartigen Abtransportvorrichtung abzutransportieren. Zum Abtransport der verbleibenden anderen Werkstückteile und gegebenenfalls auch Abfallstücke können bei der erfindungsgemäßen Plattenaufteilanlage dann zusätzlich noch weitere Fördereinrichtungen vorgesehen sein, um die Gesamteffektivität der Plattenaufteilanlage noch weiter zu erhöhen. Als weitere Fördereinrichtungen der Plattenaufteilanlage kommen dann z.B. Handlingroboter mit einer Vakuumgreifeinrichtung oder Ausziehwagen mit einer Vakuumgreifeinrichtung oder Ausziehwagen mit Schiebenocken oder auch Riemen-, Band-, Rollen- oder Kettenförderer in Frage. Es können im Abführbereich auch zwei oder mehr gleichzeitig bzw. parallel arbeitende weitere Fördereinrichtungen vorhanden sein, um den Abtransport möglichst effektiv auszugestalten.

Bei der entlang der Sägelinie verfahrbaren Säge handelt es sich günstigerweise um eine an sich bekannte Unterflurkreissäge gegebenenfalls mit Vorritzersägeblatt. Diese Säge kann in einem unterhalb des Werkstückauflagetisches verfahrbaren Sägewagen angeordnet sein. Bevorzugt ist das Sägeblatt bzw. die Säge nicht nur entlang der Sägelinien sondern auch in vertikaler Richtung verfahrbar, sodass sie über die Oberfläche des Werkstückauflagetisches angehoben, aber auch in den Bereich darunter abgesenkt werden kann. All dies ist an sich bekannt und muss nicht weiter erläutert werden. Natürlich können bei erfindungsgemäßen Plattenaufteilanlagen auch andere geeignete, entlang einer Sägelinie verfahrbare Sägen vorgesehen sein.

Der Vollständigkeit halber wird auch darauf hingewiesen, dass erfindungsgemäße Plattenaufteilanlagen natürlich nicht nur eine entlang einer einzelnen Sägelinie verfahrbare Sägen aufweisen kann. Erfindungsgemäße Plattenaufteilanlagen können, wie an sich bekannt, auch mehrere Sägelinien und mehrere verfahrbare Sägen, vorzugsweise hintereinander, aber auch parallel angeordnet, aufweisen. Bei all diesen Sägelinien und Sägen können erfindungsgemäß ausgebildete gabelartige Abtransportvorrichtungen zum Einsatz kommen.

Erfindungsgemäße Plattenaufteilanlagen können wie an sich bekannt im Zuführbereich eine oder mehrere Vorschubeinrichtungen mit Werkstückklemmern zum Zuführen des zu zersägenden Werkstücks in der Haupttransportrichtung hin zur Sägelinie aufweisen. Klemmereinführschlitze im Werkstückauflagetisch für die Werkstückklemmer sind dabei günstigerweise in einer horizontalen Richtung orthogonal zur Haupttransportrichtung zu den Fingern der gabelartigen Abtransportvorrichtung versetzt angeordnet. Dies ermöglicht es, sowohl die Werkstückklemmer als auch die Finger in den Bereich der Sägelinie und über diese hinweg zu fahren, ohne dass es zur Kollision zwischen den Fingern der zumindest einen gabelartigen Abtransportvorrichtung und den Werkstückklemmern der einen oder der mehreren Vorschubeinrichtungen kommen kann. Bevorzugt ist auch vorgesehen, wenn die Plattenaufteilanlage, vorzugsweise für jede Sägelinie, einen Druckbalken zum Andrücken des zu zersägenden Werkstücks auf den Werkstückauflagetisch im Bereich der Sägelinie aufweist. Solche Druckbalken sind bei Plattenaufteilanlagen an sich bekannt und müssen nicht weiter erläutert werden. Sie können in ihren unterschiedlichsten an sich bekannten Ausgestaltungsformen auch bei erfindungsgemäßen Plattenaufteilanlagen zum Einsatz kommen.

In bevorzugten erfindungsgemäßen Plattenaufteilanlagen ist vorgesehen, dass im Abführbereich eine Abfallfördereinrichtung zur Aufnahme und/oder zum Abtransport des zumindest einen Abfallstücks angeordnet ist, wobei über der Abfallfördereinrichtung eine schwenkbare Abfallklappe angeordnet ist, welche ebenfalls nutförmige Kanäle, in die die Finger einfahrbar sind, aufweist.

In bevorzugten Ausgestaltungsformen der Erfindung kann auch vorgesehen sein, dass im Abführbereich, vorzugsweise unmittelbar an den Werkstückauflagetisch anschließend, eine Querfördereinrichtung zum Abtransportieren des durch das Zersägen des Werkstücks entstandenen zumindest einen Werkstückteils in einer Querförderrichtung parallel zur Sägelinie angeordnet ist. Die Querfördereinrichtung kann auch, in der Haupttransportrichtung gesehen, an die oben genannte Abfallklappe anschließend angeordnet sein. Bevorzugt ist aber vorgesehen, dass die Querfördereinrichtung zwischen dem Werkstückauflagetisch und der Abfallklappe angeordnet ist. Bei der Querfördereinrichtung handelt es sich bevorzugt um eine Rollenbahn, besonders bevorzugt um eine motorisch angetriebene Rollenbahn. Bevorzugt ist vorgesehen, dass in der Querfördereinrichtung nutförmige Kanäle angeordnet sind, in die die Finger einfahrbar sind. Die nutförmigen Kanäle können z.B. zwischen den Rollen der als Rollenbahn ausgebildeten Querfördereinrichtung ausgebildet sein. Um die auf den Fingern der gabelartigen Abtransportvorrichtung liegenden Werkstückteile besonders effektiv auf der Querfördereinrichtung ablegen zu können, sehen bevorzugte Varianten vor, dass auf der vom Werkstückauflagetisch abgewandten Seite der Querfördereinrichtung ein Abstreifkamm zum Abstreifen des zumindest einen Werkstückteils von den Fingern angeordnet ist. Im Abstreifkamm sind dabei günstigerweise für jeden Finger entsprechende, nach oben hin offene Nuten bzw. Vertiefungen vorgesehen, sodass die Finger in diese Vertiefungen bzw. Nuten des Abstreifkamms abgesenkt und so das Werkstückteil am Abstreifkamm anliegend von den Fingern abgestreift werden kann.

Bevorzugt ist vorgesehen, dass die Abfallklappe und/oder die Querfördereinrichtung auf einem tieferen Höhenniveau als der Werkstückauflagetisch angeordnet ist bzw. sind. Es ist z.B. möglich, dass mit den Fingern der gabelartigen Abtransportvorrichtung zumindest drei Höhenniveaus angefahren werden können. Ein erstes Höhenniveau kann z.B. vorsehen, dass die Finger mit ihrer Auflagefläche knapp unterhalb der Auflagefläche des Werkstückauflagetisches angeordnet werden können. Ein zweites Höhenniveau kann vorsehen, dass die Finger mit ihrer Auflagefläche oberhalb der Auflagefläche des Werkstückauflagetisches angeordnet sein können. Ein drittes Höhenniveau kann vorsehen, dass die Finger mit ihren Auflageflächen unterhalb der Auflagefläche der Abfallklappe und/oder der Querfördereinrichtung oder eines Werkstückteilabtransporttisches angeordnet werden können. Das erste und das dritte Höhenniveau können auch dasselbe Niveau sein.

Günstig ist es jedenfalls, wenn die nutförmigen Kanäle im Werkstückauflagetisch, und gegebenenfalls auch die nutförmigen Kanäle in der Abfallklappe und/oder gegebenenfalls auch nutförmige Kanäle in der Querfördereinrichtung, nach oben hin offen sind und die Finger in vertikaler Richtung vollständig in den nutförmigen Kanälen versenkbar sind. Dies ermöglicht es, dass die Finger aus den jeweiligen nutförmigen Kanälen nach oben herausgefahren, aber auch von oben in diese abgesenkt und dort versenkt werden können.

Bei erfindungsgemäßen gabelartigen Abtransportvorrichtungen kann vorgesehen sein, dass alle zueinander benachbart angeordneten Finger denselben Abstand zueinander aufweisen. Man könnte in diesem Fall von einer konstanten oder überall gleichmäßigen Fingerteilung sprechen. Die erfindungsgemäß vorgesehenen gabelartigen Abtransportvorrichtungen können aber auch in verschiedenen Bereichen mit unterschiedlichen Fingerteilungen ausgebildet sein. In Bereichen mit enger Fingerteilung können dann insbesondere Werkstückteile und/oder Abfallstücke mit einer in Richtung der Sägelinie gemessen relativ kleinen Ausdehnung bzw. Länge aufgenommen und abgelegt werden. Die Bereiche mit größerer Teilung können dann z.B. zur Aufnahme von, entlang der Sägelinie gesehen, längeren Werkstückteilen und/oder Abfallstücken genutzt werden. Es kann also in anderen Worten vorgesehen sein, dass die jeweils zueinander benachbart angeordneten Finger in zumindest zwei voneinander verschiedenen Bereichen der gabelartigen Abtransportvorrichtung unterschiedlich weit voneinander beabstandet angeordnet sind.

Bevorzugte Varianten der Erfindung sehen jedenfalls vor, dass die gabelartige Abtransportvorrichtung einen Fingerträger aufweist, an dem die Finger angeordnet sind. Der Fingerträger kann sowohl oberhalb als auch unterhalb des Werkstückauflagetisches bzw. dessen Auflagefläche angeordnet sein. Bevorzugt ist der Fingerträger gemein mit seinen Fingern zur Sägelinie hin und von der Sägelinie weg und in den Richtungen parallel zur Vertikalen verfahrbar gelagert und bevorzugt auch motorisch angetrieben. Die Finger können fix und unverrückbar am Fingerträger befestigt sein. Es kann aber auch vorgesehen sein, dass die Finger individuell oder in Gruppen relativ zum Fingerträger in Richtung ihrer Längserstreckung und/oder in den Richtungen parallel zur Vertikalen, vorzugsweise motorisch angetrieben, verfahrbar und/oder, vorzugsweise motorisch angetrieben, teleskopierbar sind. Hierzu sind verschiedenste Ausgestaltungsformen denkbar.

Die durch einen Sägevorgang entstandenen Werkstückteile und/oder Abfallstücke können, in Haupttransportrichtung gemessen, länger aber auch kürzer als die Auflagefläche der Finger sein. Sind sie länger, dann können sie beim Transport bzw. beim Aufliegen auf den Fingern über die Finger in der Haupttransportrichtung auf einer oder auf beiden Seiten auch überstehen. Bevorzugt ist immer vorgesehen, dass der Schwerpunkt des Werkstückteils und/oder des Abfallstücks im Bereich zwischen zwei Fingern der gabelartigen Abtransportvorrichtung angeordnet ist, sodass das Werkstückteil und/oder Abfallstück sicher auf den Fingern und damit auf der gabelartigen Abtransportvorrichtung aufliegt.

Bevorzugte Varianten der Erfindung sehen vor, dass im Abführbereich ein Werkstückteilabtransporttisch der Plattenaufteilanlage angeordnet ist, auf dem das durch das Zersägen des Werkstücks entstandene, zumindest eine Werkstückteil von der gabelartigen Abtransportvorrichtung ablegbar ist. Um den Abtransport der Werkstückteile und/oder Abfallstücke im Abführbereich, also im Bereich, in der Haupttransportrichtung gesehen, hinter der Sägelinie möglichst effektiv auszugestalten, kann in bevorzugten Varianten auch vorgesehen sein, dass die Plattenaufteilanlage im und/oder über dem Werkstückabtransporttisch zusätzlich zur gabelartigen Abtransportvorrichtung zumindest eine weitere Fördereinrichtung, vorzugsweise zwei weitere Fördereinrichtungen, zum weiteren Abtransport der Werkstückteile zumindest in der Haupttransportrichtung aufweist. Als weitere Fördereinrichtung können dabei unterschiedlichste, an sich bekannte Arten von Fördereinrichtungen eingesetzt werden. Besonders bevorzugt ist dabei vorgesehen, dass die weitere Fördereinrichtung oder zumindest eine der weiteren Fördereinrichtungen ein Handlingroboter mit einer Vakuumgreifeinrichtung oder ein Ausziehwagen mit einer Vakuumgreifeinrichtung oder ein Ausziehwagen mit Schiebenocken ist. Es ist aber auch denkbar, die weitere oder weiteren Fördereinrichtungen als an sich bekannte Riemen-, Band-, Rollen- oder Kettenförderer auszubilden.

Wie bereits vorab angemerkt, ist günstigerweise vorgesehen, dass die Finger jeweils eine Auflagefläche für die Werkstückteile und/oder Abfallstücke aufweisen. Besonders bevorzugt kann diese Auflagefläche als eine Reiboberfläche und/oder als eine gezahnte Oberfläche ausgebildet sein. Die Auflagefläche kann z.B. aber auch als ein erhöhter Bereich einer stufenförmigen Oberfläche ausgebildet werden. Die Ausgestaltung der Auflageflächen erfolgt abhängig davon, was transportiert wird. Werden z.B. nur Abfallstücke transportiert oder Werkstückteile mit rohen Oberflächen, die noch veredelt werden, dann können z.B. gezahnte Auflageflächen eingesetzt werden, die Spuren auf den Oberflächen hinterlassen können. Werden z.B. auch Werkstückteile mit empfindlichen und/oder veredelten Oberflächen transportiert, dann können z.B. Auflageflächen mit Reiboberflächen z.B. aus Gummibeschichtungen eingesetzt werden, die keine Spuren auf den Oberflächen hinterlassen.

Neben der Plattenaufteilanlage an sich betrifft die Erfindung auch ein Verfahren zum Betrieb einer erfindungsgemäßen Plattenaufteilanlage. Dieses sieht vor, dass in zumindest einem Sägevorgang durch Zersägen des Werkstücks mit der Säge entlang der Sägelinie zumindest ein Werkstückteil und/oder zumindest ein Abfallstück erzeugt wird und nach und/oder während diesem Sägevorgang die Finger der gabelartigen Abtransportvorrichtung in den nutförmigen Kanälen des Werkstückauflagetisches vom Abführbereich, die Sägelinie kreuzend, bis in den Zuführbereich verfahrbaren werden und anschließend das zumindest eine Werkstückteil und/oder das zumindest eine Abfallstück auf den Fingern liegend von der gabelartigen Abtransportvorrichtung in der Haupttransportrichtung abtransportiert wird. Mit einer erfindungsgemäßen gabelartigen Abtransportvorrichtung kann aber nicht nur ein Abtransport von Werkstückteilen und/oder Abfallstücken erfolgen. Vor oder während des Abtransports können erfindungsgemäße gabelartige Abtransportvorrichtungen auch zum Sortieren von Werkstückteilen und/oder Abfallstücken eingesetzt werden, z.B. um so Werkstückteile und/oder Abfallstücke mit anderen Werkstückteilen und/oder Abfallstücken gleichzeitig abtransportieren zu können. In diesem Zusammenhang kann z.B. vorgesehen sein, dass zumindest zwei Werkstückteile und/oder Abfallstücke von der gabelartigen Abtransportvorrichtung im Abführbereich auf dem Werkstückauflagetisch abgelegt werden und anschließend nur eine Teilmenge dieser zumindest zwei Werkstückteile und/oder Abfallstücke auf den Fingern liegend von der gabelartigen Abtransportvorrichtung wieder angehoben und in der Haupttransportrichtung abtransportiert wird und eine restliche Teilmenge dieser zumindest zwei Werkstückteile und/oder Abfallstücke daran anschließend auf den Fingern liegend von der gabelartigen Abtransportvorrichtung einzeln oder gemeinsam mit zumindest einem anderen Werkstückteil und/oder Abfallstück wieder angehoben und in der Haupttransportrichtung abtransportiert wird. Auch hierdurch kann die Effektivität beim Abtransport der Werkstückteile und/oder Abfallstreifen effektiviert werden.

Im Sinne eines möglichst effektiven Betriebs der Plattenaufteilanlage kann vorgesehen sein, dass die Finger der gabelartigen Abtransportvorrichtung im Abführbereich bereits dann in die nutförmigen Kanäle des Werkstückauflagetisches eingefahren werden, wenn die Säge während eines Sägevorgangs noch entlang der Sägelinie verfahren wird. Eine weitere Zeitersparnis und damit Steigerung der Betriebsgeschwindigkeit der erfindungsgemäßen Plattenaufteilanlage und des erfindungsgemäßen Verfahrens kann dadurch erreicht werden, dass die Finger oder zumindest einzelne der Finger der gabelartigen Abtransportvorrichtung bereits in einem Zeitintervall in den nutförmigen Kanälen des Werkstückauflagetisches vom Abführbereich, die Sägelinie kreuzend, bis in den Zuführbereich verfahren werden, während die Säge in einem Bereich der Sägelinie verfahren wird, in dem sich keine Finger der gabelartigen Abtransportvorrichtung während dieses Zeitintervalls befinden. In anderen Worten kann vorgesehen sein, dass der Sägevorgang mit der Säge bereits in einem Bereich angefangen oder dort beendet wird, wo sich keine Finger befinden, aber gleichzeitig in anderen Bereichen der Sägelinie, in denen sich die Säge gerade nicht befindet, die Finger bereits in den Kanälen des Werkstückauflagetisches vom Abführbereich über die Sägelinie hinweg in den Zuführbereich verfahren werden. Dies ist sowohl dann möglich, wenn alle Finger fix an der gabelartigen Abtransportvorrichtung bzw. an deren Fingerträger angeordnet sind. Es kann zur Umsetzung dieser Idee aber auch vorgesehen sein, dass die Finger an dem Fingerträger individuell in Richtung ihrer Längserstreckung und/oder in vertikaler Richtung relativ zueinander verfahrbar sind.

Weitere Merkmale und Einzelheiten bevorzugter Ausgestaltungsformen der Erfindung werden nachfolgend beispielhaft anhand von verschiedenen Ausführungsformen der Erfindung erläutert. Es zeigen:
- Fig. 1 bis 3: verschiedene Beispiele von zu zersägenden Werkstücken und Werkstückteilen;
- Fig. 4 bis 7: Darstellungen zu einem ersten Ausführungsbeispiel einer erfindungsgemäßen Plattenaufteilanlage;
- Fig. 8 bis 11: verschiedene Darstellungen zu einem zweiten Ausführungsbeispiel einer erfindungsgemäßen Plattenaufteilanlage;
- Fig. 12 bis 15: verschiedene Darstellungen zu einem dritten erfindungsgemäßen Ausführungsbeispiel einer Plattenaufteilanlge;
- Fig. 16 bis 20: verschiedene Möglichkeiten der Ausgestaltung der gabelartigen Abtransportvorrichtung und der Finger;
- Fig. 21 bis 26: Darstellungen zur Erläuterung der Durchführung eines erfindungsgemäßen Verfahrens und seiner bevorzugten Ausgestaltungsformen anhand des ersten Ausführungsbeispiels einer erfindungsgemäßen Plattenaufteilanlage;
- Fig. 27 bis 30: Darstellungen zur Erläuterung von bevorzugten Vorgehensweisen mit verschiedenen anderen erfindungsgemäßen Plattenaufteilanlagen und
- Fig. 31: eine Draufsicht auf eine erfindungsgemäß ausgebildete Plattenaufteilanlage, welche sowohl mehrere parallel arbeitende Vorschubeinrichtungen im Zuführbereich als auch mehrere parallel arbeitende weitere Fördereinrichtungen im Abführbereich aufweist.

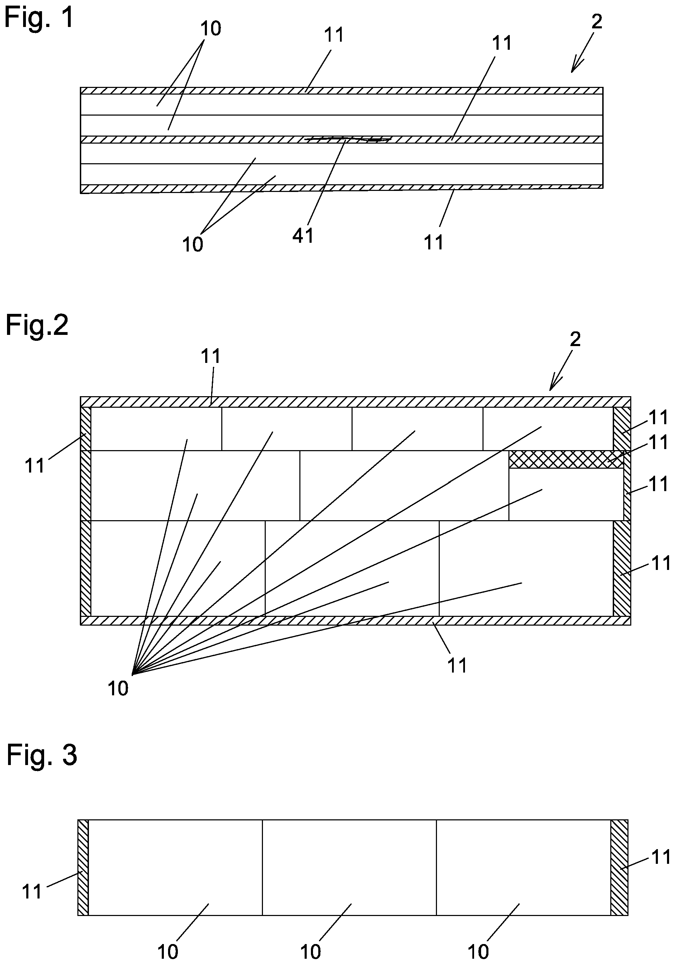

Fig. 1 zeigt beispielhaft ein erstes Beispiel eines mittels einer Plattenaufteilanlage 1 zu zersägenden Werkstücks 2. Es kann sich hierbei z.B. um eine Platte aus Massivholz oder Massivholzteilen handeln, welche einen oder mehrere hier beispielhaft eingezeichnete Materialfehler 41 aufweisen können. Solche Materialfehler können z.B. Äste, Risse oder dergleichen sein. Mittels der Sägevorgänge wird das Werkstück 2 in Werkstückteile 10 und in Abfallstücke 11 aufgeteilt bzw. zersägt. In Erweiterung dessen können natürlich aber auch Werkstückteile 10 unterschiedlichster Qualitätsstufen erzeugt werden.

Fig. 2 zeigt beispielhaft ein Werkstück 2 in Form einer großformatigen Platte, welches mittels an sich bekannten Längs-, Quer- und Drittschnitten aufzuteilen ist. Beim Durchführen dieser Längs-, Quer- und Drittschnitte entstehen die Werkstückteile 10 aber auch Abfallstücke 11 in Form von Besäumabfällen oder Abfällen, die z.B. durch die Drittschnitte erzeugt werden. Auch dies ist an sich bekannt und muss nicht weiter erläutert werden.

Fig. 3 zeigt beispielhaft einen z.B. durch Längsschnitte entstandenen Streifen, welcher durch die Querschnitte weiter in die Werkstückteile 10 aufgeteilt wird, wobei dann an den jeweiligen Enden aufgrund der Besäumung die Abfallstücke 11 entstehen.

Bei den Fig. 1 bis 3 handelt es sich lediglich um Beispiele. Es ist bekannt, dass Werkstücke 2 in Form von Platten oder Plattenstapeln in unterschiedlichster Art und Weise aufgeteilt werden können. Dies gilt auch für die Verwendung erfindungsgemäßer Plattenaufteilanlagen und die erfindungsgemäßen Verfahren zu deren Betrieb.

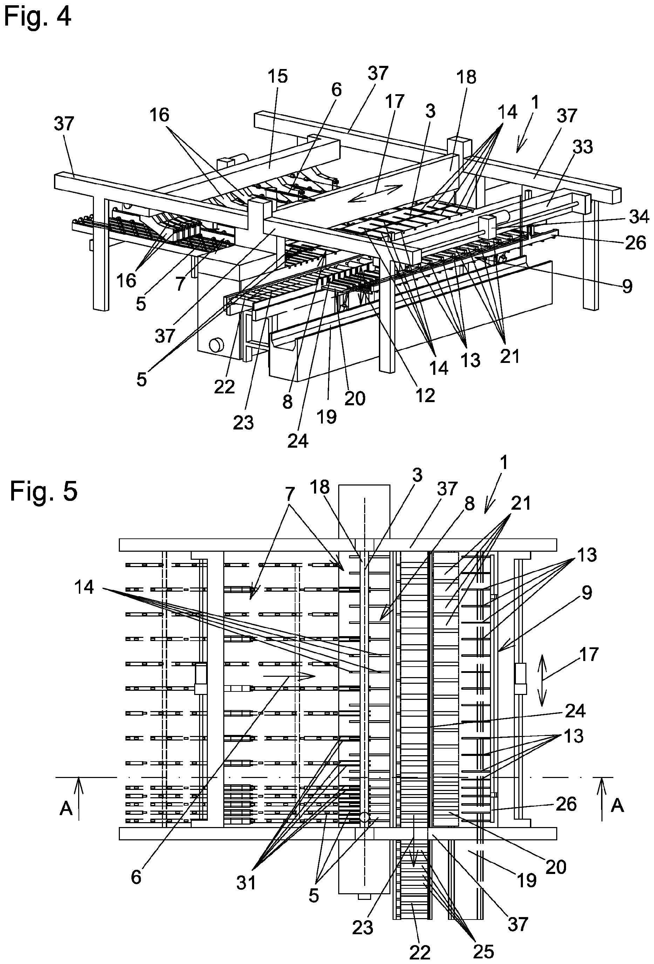

Die Fig. 4 bis 7 zeigen nun Darstellungen zu einem ersten erfindungsgemäßen Ausführungsbeispiel einer Plattenaufteilanlage 1, mit welcher z.B. die in den Fig. 1 bis 3 gezeigten Werkstücke 2 entsprechend aufgeteilt werden können, wobei aber nochmals betont wird, dass mit erfindungsgemäßen Plattenaufteilanlagen 1, also auch dem ersten Ausführungsbeispiel natürlich auch eine Vielzahl von anderen Schnittplänen abgearbeitet werden können.

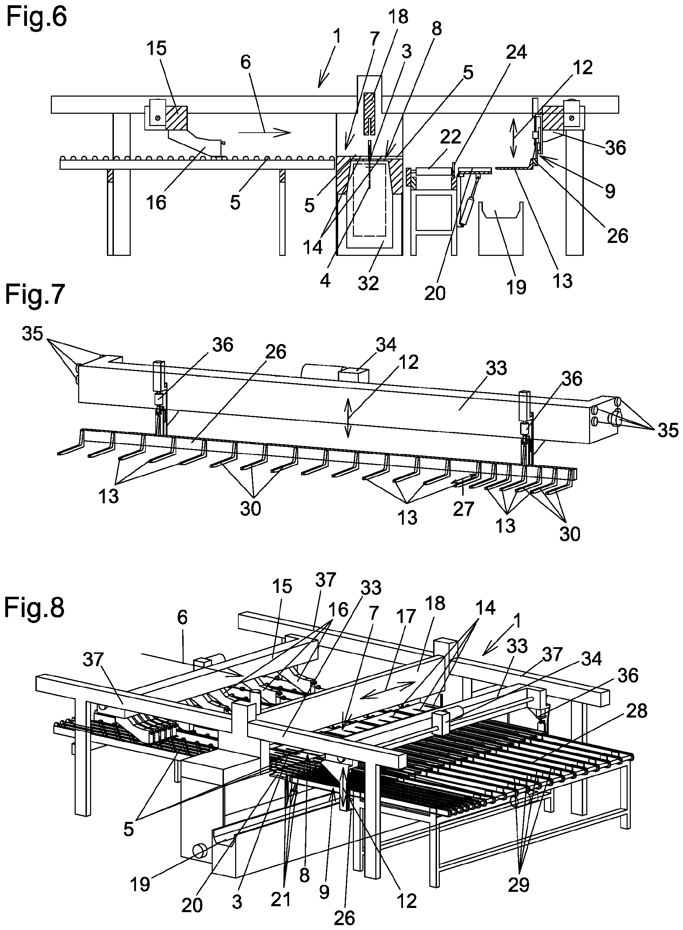

In Fig. 4 ist das erste Ausführungsbeispiel einer erfindungsgemäßen Plattenaufteilanlage 1 in einer perspektivischen Darstellung dargestellt. Fig. 5 zeigt eine Draufsicht auf diese Plattenaufteilanlage 1 aus Fig. 4. Fig. 6 zeigt einen Längsschnitt parallel zur Haupttransportrichtung 6 durch diese Plattenaufteilanlage 1 gemäß der Fig. 4 und 5. Fig. 7 zeigt losgelöst von den anderen Bauteilen die gabelartige Abtransportvorrichtung 9 dieses ersten Ausführungsbeispiels einer erfindungsgemäßen Plattenaufteilanlage 1.

Die Plattenaufteilanlage 1 weist zum Zersägen der Werkstücke 2 eine entlang einer Sägelinie 3 verfahrbare Säge 4 und einen Werkstückauflagetisch 5 auf. Die Sägelinie 3 verläuft entlang des Werkstückauflagetisches 5. In der Haupttransportrichtung 6 gesehen, liegt der Zuführbereich 7 vor der Sägelinie 3. Der Abführbereich 8 liegt, in dieser Haupttransportrichtung 6 gesehen, hinter der Sägelinie 3.

Bei der Säge 4 handelt es sich in diesem ersten wie auch in den anderen Ausführungsbeispielen um eine Unterflurtischkreissäge, welche in einem Sägewagen 32 entlang der Sägelinie 3 verfahrbar ist. Die Säge 4, bzw. in anderen Worten das Sägeblatt, ist im Sägewagen 32 heb- und senkbar angeordnet, sodass es, wie an sich bekannt, zum Zersägen des Werkstücks 2 oder der Werkstückteile 10 über die Auflagefläche des Werkstückauflagetisches 5 herausgehoben werden kann, um so die Sägevorgänge durchzuführen. Im abgesenkten Zustand ist die Säge 4 so weit in den Sägewagen 32 abgesenkt, dass sie nicht aus dem Sägespalt herausschaut und damit auch nicht über die Auflagefläche des Werkstückauflagetisches 5 übersteht. Diese abgesenkte Stellung nimmt die Säge 4 dann ein, wenn sie keinen Sägevorgang vornehmen soll, aber sich entweder in Warteposition befindet oder mit dem Sägewagen 32 an eine Ausgangsposition oder eine andere vorgegebene Position verfahren werden soll. Dies ist an sich bekannt und muss nicht weiter erläutert werden. Über der Sägelinie 3 befindet sich der an sich bekannte Druckbalken 18, welcher in an sich bekannter Art und Weise während des Sägevorgangs abgesenkt wird, um so das zu zersägende Werkstück 2 oder das zu zersägende Werkstückteil 10 auf die Auflagefläche des Werkstückauflagetisches 5 im Bereich der Sägelinie 3 anzudrücken. In den Druckbalken 18 können in an sich bekannter Art und Weise Absaugvorrichtungen und dergleichen integriert sein. All dies muss auch nicht weiter erläutert werden, da es beim Stand der Technik an sich bekannt ist.

Im Zuführbereich 7 befindet sich bei diesem wie auch bei anderen Ausführungsbeispielen dieser Erfindung eine Vorschubeinrichtung 15 mit vorzugsweise heb- und senkbaren Werkstückklemmern 16. Mit den Werkstückklemmern 16 können in an sich bekannter Art und Weise auf dem Werkstückauflagetisch 5 liegende Werkstücke 2 aber auch Werkstückteile 10 in der Haupttransportrichtung 6 zur Sägelinie 3 hin oder über diese hinweg geschoben aber auch entgegen der Haupttransportrichtung 6 von dieser oder über diese hinweg zurückgezogen werden. Die Vorschubeinrichtung 15 ist hierzu in an sich bekannter Art und Weise verfahrbar an Führungsschienen 37 der Plattenaufteilanlage 1 gelagert. Auch dies ist an sich bekannt und muss hier nicht weiter erläutert werden.

Im Abführbereich 8 ist erfindungsgemäß eine gabelartige Abtransportvorrichtung 9 für den Abtransport der durch die Sägevorgänge entstehenden Werkstückteile 10 und/oder Abfallstücke 11 angeordnet. Die gabelartige Abtransportvorrichtung 9 kann durch entsprechende Antriebe, hier dem Tragbalkenantrieb 34, zur Sägelinie 3 hin und von der Sägelinie 3 weg und in Richtungen 12 parallel zur Vertikalen verfahren werden. Im ersten Ausführungsbeispiel weist die gabelartige Abtransportvorrichtung hierzu einen Tragbalken 33 auf, welcher wiederum an Führungsschienen 37 der Plattenaufteilanlage 1 zur Sägelinie 3 und von dieser weg, also parallel zur Haupttransportrichtung 6 hin und her bewegt werden kann. Hierzu sind in diesem Ausführungsbeispiel am Tragbalken 33 entsprechende Rollen 35 vorgesehen, von denen zumindest ein Teil mittels des Tragbalkenantriebs 34 motorisch angetrieben wird. Zur Bewegung der gabelartigen Abtransportvorrichtung 9 in den Richtungen 12 parallel zur Vertikalen sind in diesem Ausführungsbeispiel die Hubantriebe 36 vorgesehen, welche in diesem Ausführungsbeispiel am Fingerträger 26 angreifen. All dies ist besonders gut in Fig. 7 zu sehen. Dort erkennt man auch, dass die gabelartige Abtransportvorrichtung 9 eine Vielzahl von in der jeweiligen Richtung 27 längserstreckten Fingern 13 aufweist. In diesem Ausführungsbeispiel wie auch in anderen bevorzugten Ausführungsvarianten der Erfindung sind diese Finger 13 am Fingerträger 26 angeordnet und zusammen mit diesem bewegbar. In diesem ersten Ausführungsbeispiel sind sie am Fingerträger 26 fix bzw. starr befestigt.

Im Werkstückauflagetisch 5 befinden sich nutförmige Kanäle 14 in die die Finger 13 einfahrbar sind. Diese nutförmigen Kanäle 14 sind besonders gut in den Fig. 4 und 5 zu sehen. Dort ist auch gut zu erkennen, dass sich die nutförmigen Kanäle erfindungsgemäß im Werkstückauflagetisch 5 vom Abführbereich 8, die Sägelinie 3 kreuzend oder in anderen Worten über die Sägelinie hinweg, bis in den Zuführbereich 7 erstrecken, sodass die Finger 13 in den nutförmigen Kanälen 14 des Werkstückauflagetisches 5 vom Abführbereich 8, die Sägelinie 3 kreuzend oder in anderen Worten über die Sägelinie 3 hinweg, bis in den Zuführbereich 7 verfahren werden können.

In den Fig. 4 und 5 ist auch zu sehen, dass in diesem Ausführungsbeispiel, wie auch in anderen bevorzugten Varianten der Erfindung, im Werkstückauflagetisch 5 im Zuführbereich 7 Klemmereinführschlitze 31 vorhanden sind, in die die Werkstückklemmer 16 der Vorschubeinrichtung 15 einfahrbar sind, sodass die Werkstückklemmer 16 sehr nah bis zur Sägelinie 3 hin und auch über diese hinweg ein Stück weit in den Abführbereich 8 hinein verfahren werden können. Hierdurch können zu zersägende Werkstücke 2 oder Werkstückteile 10, auch wenn sie sehr schmal sind, bis zur Sägelinie 3 hin und über diese hinweg geschoben, aber auch entgegen der Haupttransportrichtung 6 aus dem Abführbereich 8 wieder in den Zuführbereich 7 zurückgezogen werden. Damit die Werkstückklemmer 6 der Vorschubeinrichtung 15 und die Finger 13 der gabelartigen Abtransportvorrichtung 9 nicht miteinander kollidieren können und damit vollkommen unabhängig voneinander operieren können, ist günstigerweise, wie hier auch realisiert, vorgesehen, dass die Werkstückklemmer 16 der Vorschubeinrichtung 15 in der horizontalen Richtung 17 orthogonal zur Haupttransportrichtung 6 zu den Fingern 13 der gabelartigen Abtransportvorrichtung 9 versetzt angeordnet sind. Dies ist in den Fig. 4 und 5 gut an der, in Richtung 17 zueinander versetzten, Anordnung der nutförmigen Kanäle 14 und der Klemmereinführschlitze 31 zu sehen.

Im Abführbereich 8, also in Haupttransportrichtung 6 gesehen hinter der Sägelinie 3, befindet sich eine Abfallfördereinrichtung 19 zur Aufnahme und zum Abtransport der Abfallstücke 11. Über der Abfallfördereinrichtung 19 ist eine schwenkbare Abfallklappe 20 angeordnet. Die Abfallklappe 20 weist ebenfalls nutförmige Kanäle 21 auf, in die die Finger 13 der gabelartigen Abtransportvorrichtung 9 einfahrbar sind. In diesem Ausführungsbeispiel der Plattenaufteilanlage 1 befindet sich im Abführbereich 8 auch eine Querfördereinrichtung 22 zum Abtransportieren der Werkstückteile 10 in einer Querförderrichtung 23 parallel zur Sägelinie 3. Auch in der Querfördereinrichtung 22 sind nutförmige Kanäle 25 angeordnet, in die die Finger 13 der gabelartigen Abtransportvorrichtung 9 einfahrbar sind. Abweichend vom hier gezeigten Ausführungsbeispiel könnte die Abfallklappe 20 und die unter ihr angeordnete Abfallfördereinrichtung 19 aber auch zwischen dem Werkstückauflagetisch 5 und der Querfördereinrichtung 22 angeordnet sein. Bei diesen Varianten würde dann, in der Haupttransportrichtung 6 gesehen, hinter der Sägelinie 3 zunächst die Abfallklappe 20 und dann die Querfördereinrichtung 22 folgen. Hier in diesem ersten Ausführungsbeispiel ist es, wie insbesondere in Fig. 6 gut zu sehen, jedenfalls so, dass die Querfördereinrichtung 22 zwischen dem Werkstückauflagetisch 5 und der Abführklappe 20 angeordnet ist.

Die Querfördereinrichtung 22 dieses Ausführungsbeispiels ist als eine, vorzugsweise motorisch angetriebene, Rollenbahn ausgebildet. Auf der vom Werkstückauflagetisch 5 abgewandten Seite der Querfördereinrichtung 22 befindet sich in diesem Ausführungsbeispiel auch ein Abstreifkamm 24 zum Abstreifen der Werkstückteile 10 von den Fingern 13 auf die Querfördereinrichtung 22. Der Abstreifkamm 24 hat entsprechend eine Abfolge von in Fig. 4 sichtbaren nutförmigen Ausnehmungen, in die die Finger 13 der gabelartigen Abtransportvorrichtung für den Abstreifvorgang abgesenkt werden können.

Die Abfallklappe 20 und auch die Querfördereinrichtung 22 liegen in diesem ersten Ausführungsbeispiel, wie insbesondere in Fig. 6 gut zu sehen, auf einem tieferen Höhenniveau als der Werkstückauflagetisch 5. Günstigerweise ist vorgesehen, dass mit der gabelartigen Abtransportvorrichtung 9 zumindest drei Höhenniveaus angefahren werden können. Die weiter hinten noch erläuterte Auflagefläche 30 der Finger 13 kann bevorzugt ein kleines Stück unterhalb der Auflagefläche des Werkstückauflagetisches 5 angeordnet werden, sodass die Finger 13 in die nutförmigen Kanäle 14 eingefahren und dort unter auf dem Werkstückauflagetisch 5 aufliegenden Werkstückteilen 10 und Abfallstücken 11 hindurchgefahren werden können. Zum Abheben der Werkstückteile 10 und/oder Abfallstücke 11 vom Werkstückauflagetisch 5 können die Finger 13 dann bevorzugt auf ein zweites Höhenniveau über dem Werkstückauflagetisch 5 angehoben werden. Zum Ablegen der Werkstückteile 10 auf der Querfördereinrichtung 22 und der Abfallstücke 11 auf der Abfallklappe 20 können die Finger 13 zusätzlich noch auf ein drittes Höhenniveau abgesenkt werden. Dieses dritte Höhenniveau könnte grundsätzlich auch dasselbe sein wie das erste Höhenniveau. Die hier in Fig. 6 gezeigte, in dem ersten Ausführungsbeispiel realisierte Variante, bei dem das erste Höhenniveau und das dritte Höhenniveau voneinander verschieden sind, hat aber den Vorteil, dass die gabelartige Abtransportvorrichtung 9 mit ihren Fingern 13 über gegebenenfalls noch auf der Querfördereinrichtung 22 liegende Werkstückteilen 10 und/oder über noch auf der Abfallklappe 20 liegende Abfallstücke 11 hinweggefahren werden können.

Wie eingangs bereits erläutert, können die Finger 13 grundsätzlich so angeordnet sein, dass zwischen zwei benachbarten Fingern 13 immer derselbe Abstand in der horizontalen Richtung 17 vorliegt. Fig. 7 zeigt aber, dass dies nicht zwingend so sein muss. Hier sind beispielhaft zwei voneinander verschiedene Bereiche der gabelartigen Abtransportvorrichtung 9 zu sehen, wobei der Abstand zwischen jeweils benachbarten Fingern 13 in dem einen Bereich größer ist als in dem anderen.

In Fig. 7 sieht man jedenfalls den Fingerträger 26 der Abtransportvorrichtung 9, an dem die Finger 13 in diesem Ausführungsbeispiel starr angeordnet sind. Der Fingerträger 26 kann in der bereits geschilderten Art und Weise gemeinsam mit seinen Fingern 13 zur Sägelinie 3 hin und von der Sägelinie 3 weg und in den Richtungen 12 parallel zur Vertikalen bewegt werden. Der Vollständigkeit halber wird noch darauf hingewiesen, dass die nutförmigen Kanäle 14 im Werkstückauflagetisch 5, die nutförmigen Kanäle 21 in der Abfallklappe 20 und die nutförmigen Kanäle 25 in der Querförderrichtung 22 jeweils nach oben hin offen sind und die Finger 13 in vertikaler Richtung vollständig in den nutförmigen Kanälen jeweils versenkbar sind.

In Ergänzung bzw. Abweichung von diesem ersten Ausführungsbeispiel kann natürlich auch vorgesehen sein, dass mehrere Querfördereinrichtungen 22 und/oder mehrere Abfallklappen 20 mit entsprechenden, darunter angeordneten Abfallfördereinrichtungen 19, in der Haupttransportrichtung 6 gesehen, hintereinander angeordnet sind. Dies kann z.B. sinnvoll sein, wenn Werkstücke 2 aus unterschiedlichen Materialien auf der Plattenaufteilanlage 1 verarbeitet werden. Es ist so möglich, sowohl Werkstückteile 10 als auch Abfallstücke 11 zu sortieren und sie z.B. sortenrein abzutransportieren. Dies erleichtert z.B. das Recyceln von Abfallstücken 11.

Ausgehend von diesem bislang geschilderten ersten Ausführungsbeispiel der Erfindung können auch weitere Modifikationen durchgeführt werden. So können z.B. zusätzliche Auflageflächen zwischen dem Werkstückauflagetisch 5 und der Querfördereinrichtung 22 und/oder Abfallklappe 20 realisiert werden. Auch in diesen zusätzlichen Auflageflächen können entsprechende Nuten für die Finger 13 der gabelartigen Abtransportvorrichtung 9 vorhanden sein. Zusätzliche Auflageflächen können z.B. notwendig werden, wenn spezielle Abläufe beim Zersägen des Werkstücks 2 realisiert werden sollen, bei denen Zwischenablagen notwendig sind.

In den Fig. 8 bis 11 ist ein zweites erfindungsgemäßes Ausführungsbeispiel einer Plattenaufteilanlage 1 dargestellt. Die Unterschiede zum ersten Ausführungsbeispiel betreffen im Wesentlichen nur den Aufbau im Abführbereich 8. Entsprechend werden im Folgenden auch nur die Unterschiede zum ersten Ausführungsbeispiel erläutert und ansonsten auf die obigen Ausführungen zu diesem ersten Ausführungsbeispiel verwiesen.

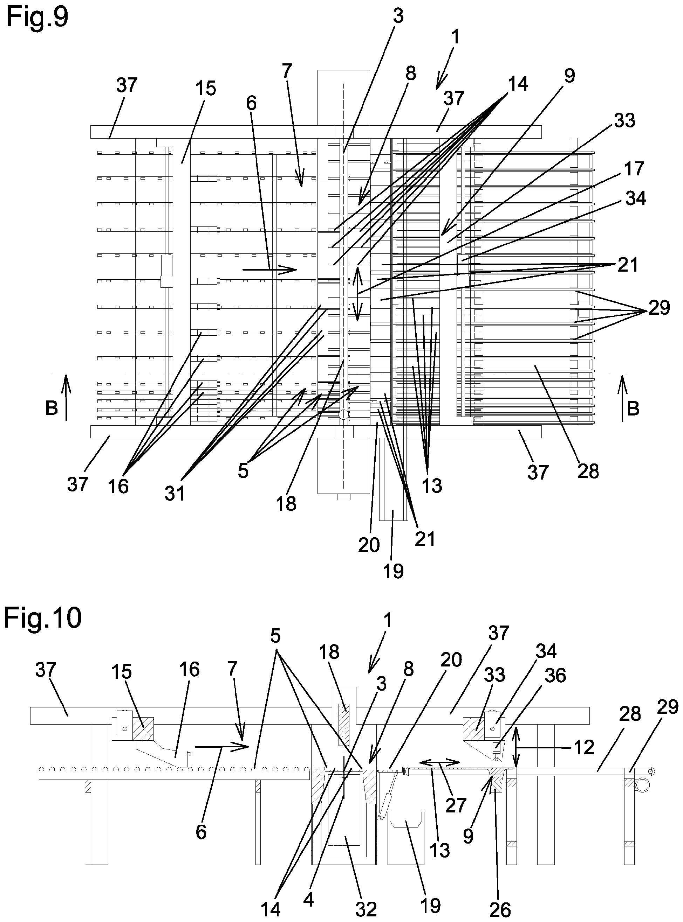

Fig. 8 zeigt wiederum eine perspektivische Darstellung, Fig. 9 eine Draufsicht und Fig. 10 einen Längsschnitt parallel zur Haupttransportrichtung 6 durch diese Plattenaufteilanlage 1 des zweiten Ausführungsbeispiels. In diesem zweiten Ausführungsbeispiel wird auf die Querfördereinrichtung 22 verzichtet. Die Abfallklappe 20 und die darunter angeordnete Abfallfördereinrichtung 19 sind direkt im Anschluss an den Werkstückauflagetisch 5 angeordnet. Im Unterschied zum ersten Ausführungsbeispiel weist diese Plattenaufteilanlage 1 des zweiten Ausführungsbeispiels aber im Abführbereich 8, an die Abfallklappe 20 in Haupttransportrichtung 6 anschließend, einen Werkstückteilabtransporttisch 28 auf, der mit einer weiteren Fördereinrichtung 29 ausgestattet ist. Die weitere Fördereinrichtung 29 ist hier beispielhaft als eine Abfolge von Riemenförderern ausgebildet, sodass mit dieser weiteren Fördereinrichtung 29 auf dem Werkstückteilabtransporttisch 28 liegende Werkstückteile 10 in Haupttransportrichtung 6 abtransportiert und soweit sinnvoll, auch entgegen der Haupttransportrichtung 6 transportiert werden können. Die Werkstückteile 10 können jedenfalls mittels der gabelartigen Abtransportvorrichtung 9 auf dem Werkstückteilabtransporttisch 28 abgelegt werden.

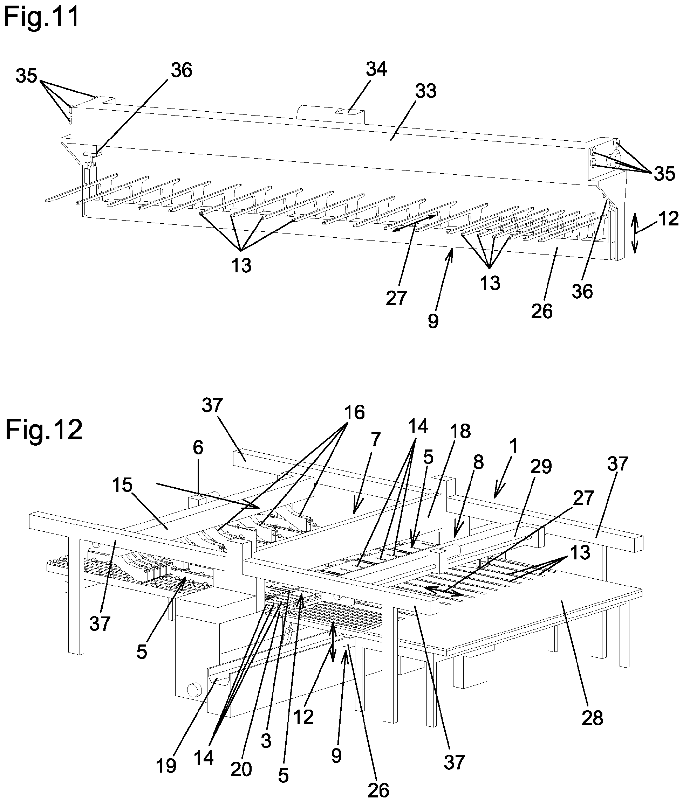

Die in diesem Ausführungsbeispiel realisierte erfindungsgemäße gabelartige Abtransportvorrichtung 9 ist in Fig. 11 separat dargestellt. Sie weist, wie im ersten Ausführungsbeispiel, einen Tragbalken 33 mit einem Tragbalkenantrieb 34 und Rollen 35 auf. Dieser Tragbalken 33 ist in Richtung Haupttransportrichtung 6 und in der Gegenrichtung verschiebbar in den entsprechenden Führungsschienen 37 im Abführbereich 8 gelagert, sodass die gabelartige Abtransportvorrichtung 9 mittels der vom Tragbalkenantrieb 34 angetriebenen Rollen 35 zur Sägelinie 3 hin und von der Sägelinie 3 weg verfahren werden kann. Am Tragbalken 33 hängend angebracht ist hier in diesem Ausführungsbeispiel der Fingerträger 26 an dem wiederum die Finger 13 auch in diesem Ausführungsbeispiel fix angeordnet sind. Auch hier gibt es zwei Bereiche in denen die jeweils zueinander benachbarten Finger 13 unterschiedlichen Abstand zueinander aufweisen. Das Verstellen der Finger 13 und des Fingerträgers 26 in den Richtungen 12 parallel zur Vertikalen wird wiederum durch die Hubantriebe 36 realisiert. Der Fingerträger 26 ist, wie in den Fig. 8 und 10 gut zu sehen ist, hier in diesem Ausführungsbeispiel aber unterhalb der Auflagefläche des Werkstückteilabtransporttisches 28 angeordnet. Die Finger 13 können durch entsprechendes Anheben und Absenken des Fingerträgers 26 in vertikaler Richtung bewegt werden, sodass sie sowohl unter die Auflagefläche des Werkstückteilabtransporttisches 28 als auch darüber angeordnet werden können und auch entsprechend auf dem gewünschten Höhenniveau in die nutförmigen Kanäle 14 und 21 des Werkstückauflagetisches 5 und der Abfallklappe 20 eingefahren werden können.

Das dritte, in den Fig. 12 bis 15 dargestellte, Ausführungsbeispiel einer erfindungsgemäßen Plattenaufteilanlage ist wiederum eine Modifikation des zweiten Ausführungsbeispiels. Die Änderungen betreffen im Wesentlichen die Ausgestaltung des Werkstückteilabtransporttisches 28, der weiteren Fördereinrichtung 29 und der erfindungsgemäßen gabelartigen Abtransportvorrichtung 9. Letztere ist in diesem Ausführungsbeispiel nicht wie bisher an den Führungsschienen 37 aufgehängt und geführt. Der Fingerträger 26 mit den darauf fix angeordneten Fingern 13 ist hier in diesem dritten Ausführungsbeispiel vielmehr an einem Träger 44 gelagert, welcher mittels des Trägerantriebs 43 in der Haupttransportrichtung 6 und in der Gegenrichtung dazu verschiebbar auf einer auf dem Boden montierten Schienenführung 42 geführt ist. Auch hierdurch ist der Fingerträger 26 mit den Fingern 13 somit in der Haupttransportrichtung 6 von der Sägelinie 3 weg und in der Gegenrichtung zur Sägelinie 3 hin verschiebbar. Für die Vertikalverstellung des Fingerträgers 26 und damit auch der Finger 13 sorgt hier wiederum ein Hubantrieb 36. Auch hier können die Finger 13 somit auf die jeweils benötigen Höhenniveaus gehoben und abgesenkt werden, um so Werkstückteile 10 auf dem Werkstückteilabtransporttisch 28 ablegen zu können und auch in die nutförmigen Kanäle 14 des Werkstückauflagetisches 5 und auch die nutförmigen Kanäle 21 der Abfallklappe 20 eingefahren werden und aus diesen herausgehoben werden zu können.

In diesem dritten Ausführungsbeispiel weist der Werkstückteilabtransporttisch 28 zwar entsprechende Ausnehmungen für die Finger 13 aber keinen eigenen Antrieb auf. Als weitere Fördereinrichtung 29 ist hier vielmehr ein Ausziehwagen mit einer Vakuumgreifeinrichtung 38 vorgesehen. Der Ausziehwagen besteht hier aus einem Tragbalken 33 mit einem Tragbalkenantrieb 34 und damit angetriebenen Rollen 35, welche wiederum in Führungsschienen 37 geführt sind. Hierdurch wird es möglich, den Tragbalken 33 mit der daran heb- und senkbar befestigten Vakuumgreifeinrichtung 38 entgegen der Haupttransportrichtung 6 zur Sägelinie 3 hin und in der Haupttransportrichtung 6 von der Sägelinie 3 weg zu bewegen, um so Werkstückteile 10 auf dem Werkstückteilabtransporttisch 28 liegend zu transportieren.

Um die Reibung auf dem Werkstückteilabtransporttisch 28 zu minimieren, kann dieser, wie an sich bekannt, mit einer Bürstenauflage, einem Luftkissen, Rollenauflagen oder dergleichen ausgestattet sein.

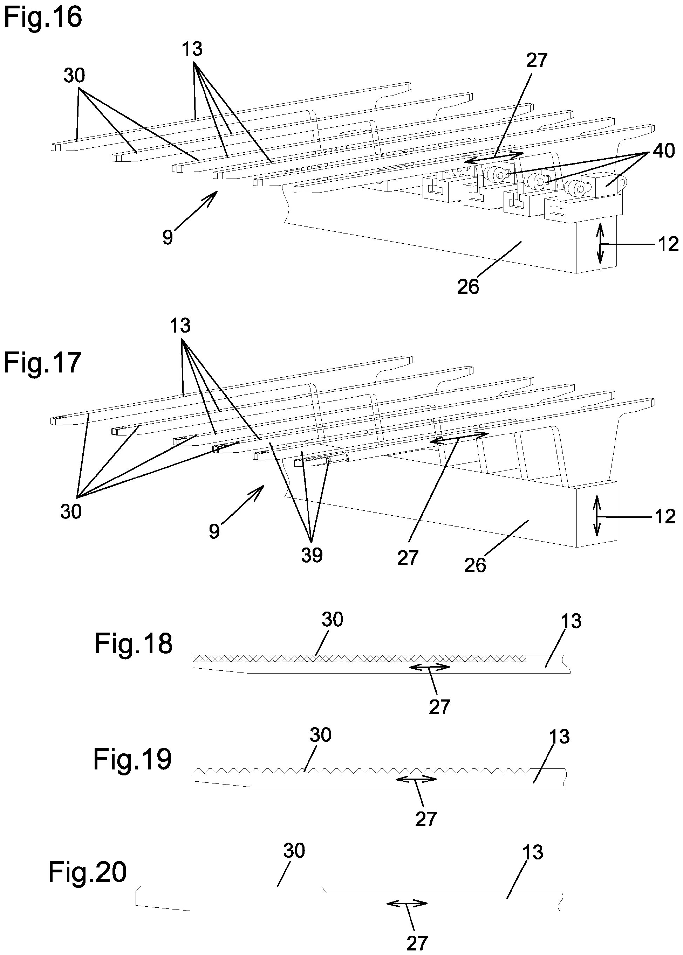

Während bei den bisher geschilderten Ausführungsbeispielen die Finger 13 immer starr am Fingerträger 26 und damit relativ zum Fingerträger 26 auch nicht bewegbar angeordnet sind, zeigen die Fig. 16 und 17 alternative Ausgestaltungsformen hierzu. In Fig. 16 sind die Finger 13 individuell oder in Gruppen relativ zum Fingerträger 26 in Richtung 27 ihrer Längserstreckung bewegbar. Hierzu ist jedem Finger 13 ein eigener Verschiebeantrieb 40 zugeordnet. Mit diesem lässt sich jeder Finger 13 individuell relativ zum Fingerträger 26 in den Richtungen 27 seiner Längserstreckung bewegen. Auch wenn dies hier nicht explizit dargestellt ist, könnte auch jedem Finger 13 zusätzlich oder anstelle dessen ein Verstellantrieb zugeordnet sein, mit dem er relativ zum Fingerträger 26 individuell in den Richtungen 12 parallel zur Vertikalen verstellbar ist.

Fig. 17 zeigt eine Variante, bei der die Finger 13, vorzugsweise motorisch angetrieben, teleskopierbar sind. Hier können die jeweils vorderen Enden der Finger 13, welche man auch als Fingerspitzen bezeichnen könnte, mittels Teleskopen 39 in Richtung 37 ihrer Längserstreckung individuell ein- und ausgefahren werden. Auch hier sind die Finger 13 also zumindest bereichsweise individuell oder in Gruppen relativ zum Fingerträger 26 bewegbar. Auch wenn dies nicht dargestellt ist, könnte über entsprechende Antriebe auch eine individuelle Bewegbarkeit der Finger 13 relativ zum Fingerträger 26 in den Richtungen 12 parallel zur Vertikalen realisiert werden.

Diese individuelle Bewegbarkeit der Finger 13, wie sie beispielhaft anhand der Fig. 16 und 17 erläutert wurde, kann in verschiedensten Ausführungsbeispielen der erfindungsgemäßen Plattenaufteilanlage 1 auch dazu genutzt werden, dass man die Finger 13 einzeln oder in Gruppen bereits in einem Zeitintervall in die nutförmigen Kanäle 14 einfahren und über die Sägelinie 3 vom Abführbereich 8 in den Zuführbereich 7 verfahren kann, während die Säge in einem anderen Bereich der Sägelinie 3 noch oder bereits verfahren wird. In diesem anderen Bereich befinden sich in diesem Moment dann keine Finger 13 der gabelartigen Abtransportvorrichtung 9. Natürlich könnte diese individuelle Verstellbarkeit der Finger 13 auch dazu genutzt werden, dass man mit den Fingern 13 eben nur dort in die nutförmigen Kanäle 13 des Werkstückauflagetisches 5 einfährt, wo sich auch tatsächlich abzutransportierende Werkstückteile 10 und/oder Abfallstücke 11 befinden.

Die Finger 13 können natürlich, insbesondere wenn sie individuell verschiebbar sind, auch dazu genutzt werden, den entlang der Sägelinie 3 verlaufenden Schnittspalt sofort nach dem Vorbeifahren der Säge 4 wieder zu verschließen. Hierdurch kann verhindert werden, dass sehr schmale Abfallstücke 11 und/oder Werkstückteile 10 in den Schnittspalt hineinfallen und diesen blockieren können. Dies kann z.B. bei Besäumschnitten und dergleichen genutzt werden. Der Hub- bzw. der Verstellweg der Finger 13 kann an die jeweiligen Gegebenheiten, also die Breite des Schnittspalts usw. angepasst werden.

Die Fig. 18 bis 20 zeigen nun beispielhaft, wie die Auflageflächen 30 der Finger 13, auf denen die Werkstückteile 10 und/oder Abfallstücke 11 dann aufliegen, ausgestaltet sein können. In Fig. 18 ist die Auflagefläche 30 als eine Fläche mit erhöhter Reibung, also als eine Reiboberfläche ausgebildet, während Fig. 19 eine gezahnte Auflagefläche 30 zeigt. In Fig. 20 weist der Finger 13 eine stufenförmige Struktur auf, wobei die Auflagefläche 30 als ein erhöhter Bereich der stufenförmigen Oberfläche ausgebildet ist.

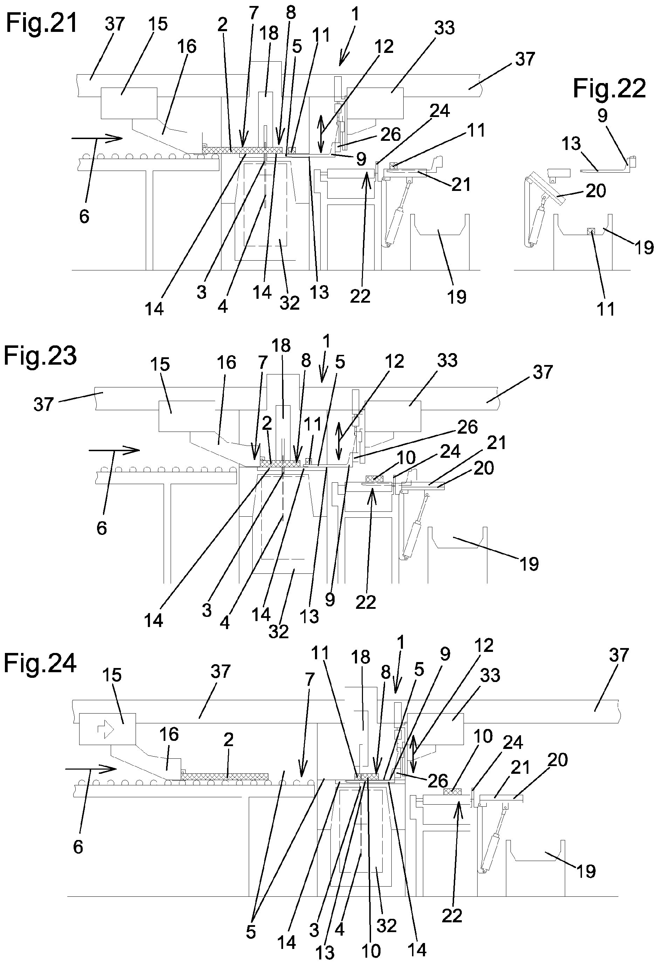

Nachfolgend wird nun anhand der Fig. 21 bis 26 das Zersägen des in Fig. 1 gezeigten Werkstücks mit einer Plattenaufteilanlage 1 gemäß dem ersten Ausführungsbeispiel erläutert. Dabei wird, wie nachfolgend dargelegt, auch das erfindungsgemäße Verfahren eingesetzt, bei dem in zumindest einem Sägevorgang durch Zersägen des Werkstücks 2 mit der Säge 4 entlang der Sägelinie 3 zumindest ein Werkstückteil 10 und/oder zumindest ein Abfallstück 11 erzeugt wird und nach und/oder während diesem Sägevorgang die Finger 13 der gabelartigen Abtransportvorrichtung 9 in den nutförmigen Kanälen 14 des Werkstückauflagetisches 5 vom Abführbereich 8 die Sägelinie 3 kreuzend bis in den Zuführbereich 7 verfahren werden und anschließend das zumindest eine Werkstückteil 10 und/oder das zumindest eine Abfallstück 11 auf den Fingern liegend von der gabelartigen Abtransportvorrichtung 9 in der Haupttransportrichtung 6 abtransportiert wird.

In Fig. 21 ist zunächst eine Situation dargestellt, bei der die Vorschubeinrichtung 15 mit den Werkstückklemmern 16 das zu zersägende Werkstück 2 aus Fig. 1 zur Sägelinie 3 gefördert hat und bereits in bekannter Art und Weise der erste Besäumschnitt durchgeführt wurde, wobei das in Fig. 21 gezeigte Abfallstück 11 entstanden ist. Beim Positionieren für den zweiten Schnitt, oder in anderen Worten Sägevorgang, ist die Vorschubeinrichtung 15 zunächst etwas weiter in Haupttransportrichtung 6 über die Sägelinie 3 gefahren worden, als dies zur Positionierung des Werkstücks 2 über der Sägelinie 3 notwendig wäre. Anschließend ist die Vorschubeinrichtung 15 mit dem Werkstück 2 ein Stück zurückgefahren, sodass die nächste Schnittlinie im Werkstück 2 auf der Sägelinie 3 zu liegen kommt. Hierdurch liegt das Abfallstück 11 wie in Fig. 21 dargestellt, mit einem gewissen Abstand zum restlichen Werkstück 2 im Abführbereich 8 auf dem Werkstückauflagetisch 5. Dies erleichtert das Anheben des Abfallstücks 11 vom Werkstückauflagetisch 5. Bereits während des Besäumschnitts zur Abtrennung des Abfallstücks 11 ist die gabelartige Abtransportvorrichtung 9 mit ihren Fingern 13 auf dem ersten Höhenniveau in die nutförmigen Kanäle 14 des Werkstückauflagetisches 5 im Abführbereich 8 eingefahren, sodass nun ausgehend von der Situation gemäß Fig. 21 die Finger 13 der gabelartigen Abtransportvorrichtung 9 mit dem darauf liegenden Abfallstück 11 angehoben werden können, um das Abfallstück 11 in der Haupttransportrichtung 6 abzutransportieren. Während der zweite Schnitt bzw. Sägevorgang mittels der Säge 4 am Werkstück 2 ausgeführt wird, fährt die gabelartige Abtransportvorrichtung 9 über die Abfallklappe 20. Durch Absenken der Finger 13 in die nutförmigen Kanäle 21 der Abfallklappe 20 wird das beim Besäumschnitt entstandene Abfallstück 11 auf der Abfallklappe 20 abgelegt. Anschließend wird die gabelartige Abtransportvorrichtung 9 in der Haupttransportrichtung 6 ein Stück weitergefahren, sodass dann wie in Fig. 22 dargestellt, durch Absenken der Abfallklappe 20 das Abfallstück 11 in die Abfallfördereinrichtung 19 abgeworfen und dort abtransportiert werden kann. Der beschriebene Ablauf zum Abtransport des Abfallstücks 11 vom Werkstückauflagetisch 5 mittels der gabelartigen Abtransportvorrichtung 9 funktioniert sehr prozesssicher und dies auch dann, wenn das Abfallstück 11 z.B. umkippt, weil seine Breite im Verhältnis zur Höhe sehr schmal ist. Bei einer entsprechenden Anzahl von Fingern 13 ist darüber hinaus auch der Transport von Abfallstücken 11 möglich, welche sehr dünn und labil sind, genauso wie der Abtransport von Abfallstücken 11, welche nach dem Sägevorgang in mehrere Einzelteile zerfallen oder entsprechend kurz sind. Fig. 23 zeigt nun die Situation, bei der die Schnitte bzw. Sägevorgänge 2, 3 und 4 durch das Werkstück 2 gemäß Fig. 1 entlang der Sägelinie 3 bereits durchgeführt wurden und der fünfte Schnitt momentan ausgeführt wird. Die mit den Schnitten 2 und 3 erzeugten Werkstückteile 10 wurden nacheinander einzeln mit der gabelartigen Abtransportvorrichtung 9 von dem Werkstückauflagetisch 5 abgehoben und zur Querfördereinrichtung 22 transportiert, welche in diesem ersten Ausführungsbeispiel, wie dargelegt, ein Rollenförderer ist. Die Zwischenräume zwischen den Rollen bilden die nutförmigen Kanäle 25 der Querfördereinrichtung 22 in die die Finger 13 zum Ablegen des jeweiligen Werkstückteils 10 abgesenkt werden können. Beim Ablegen des Werkstückteils 10 auf der Querfördereinrichtung 22 kann jeweils der Abstreifkamm 24 genutzt werden. Es ist aber genauso gut möglich, durch entsprechend tiefes Absenken der Finger 13 in den nutförmigen Kanälen 25 der Querfördereinrichtung 22 das Werkstückteil 10 so auf der Querfördereinrichtung 22 abzulegen, dass der Abstreifkamm 24 nicht benötigt wird.

Mit dem vierten Schnitt bzw. Sägevorgang wurde das in Fig. 23 im Abführbereich 8 dargestellte Abfallstück 11 erzeugt, in welchem sich der in Fig. 1 gezeigte Materialfehler 41 befindet. Fig. 23 zeigt, wie dieses Abfallstück 11 auf den Fingern 13 liegend bereits vom Werkstückauflagetisch 5 abgehoben wurde, um anschließend in der geschilderten Art und Weise auf der Abfallklappe 20 abgelegt zu werden. In Fig. 23 ist auch ersichtlich, dass die Anordnung der Querfördereinrichtung 22 und der Abfallklappe 20 auf einem Höhenniveau unter der Auflageoberfläche des Werkstückauflagetisches 5 den Vorteil hat, dass man mit den Fingern 13 der gabelartigen Abtransportvorrichtung 9 über gegebenenfalls noch auf der Querfördereinrichtung 22 liegende Werkstückteile 10 oder auf der Abfallklappe 20 noch liegende Abfallstücke 11 hinwegfahren kann.

Der Vollständigkeit halber ist auch darauf hinzuweisen, dass bei entsprechend breiten Werkstücken 10 und/oder Abfallstücken 11 die Finger 13 nicht wie in den Fig. 21, 23 und 24 vollständig unter dem Werkstückteil 10 und/oder dem Abfallstück 11 hindurchgefahren werden müssen, sondern dass diese dann bei entsprechender Breite auch ein Stück weit über das Ende der Finger 13 hinausstehen können, wenn sie mittels der Finger 13 vom Werkstückauflagetisch 5 abgehoben werden. In diesen Fällen kann das in Fig. 21 beschriebene Vorfahren und wieder Zurückziehen des Werkstücks 2 mittels der Vorschubeinrichtung 15 auch entfallen. Die abzuhebenden Werkstückteile 10 bzw. Abfallstücke 11 liegen dann direkt an den momentan geschnittenen Werkstücken 2 an. Die Finger 13 werden dann nicht ganz bis zur Sägelinie 3 gefahren. Trotzdem ist ein Anheben mittels der Finger 13 möglich, wodurch eben bei entsprechend breiten Werkstückteilen 10 und/oder Abfallstücken 11 der Vorgang noch vereinfacht und beschleunigt werden kann. Natürlich ist es auch möglich, zwei oder mehr Werkstückteile 10 und/oder Abfallstücke 11 gleichzeitig auf den Fingern 13 liegend mittels der gabelartigen Abtransportvorrichtung 9 anzuheben.

Fig. 24 zeigt nun die Situation, bei der der fünfte und der sechste Schnitt an dem Werkstück 2 gemäß Fig. 1 durchgeführt wurden. Bereits unmittelbar nachdem das Werkstück 2 für den letzten, also den sechsten Schnitt, über der Sägelinie 3 positioniert und vom abgesenkten Druckbalken 18 auf den Werkstückauflagetisch 5 gedrückt wurde, wurden die Werkstückklemmer 16 vom Werkstück 2 gelöst, sodass während der Durchführung des sechsten Sägevorgangs bzw. Schnitts die Vorschubeinrichtung 15 bereits entgegen der Haupttransportrichtung 6 zurückgefahren wurde, um das nächste Werkstück zu übernehmen und zur Sägelinie 3 zu transportieren. Während der Durchführung dieses sechsten Schnittes sind die Finger 13 der gabelartigen Abtransportvorrichtung 9 in den nutförmigen Kanälen 14 im Abführbereich 8 bereits kurz vor die Sägelinie 3 gefahren. Sobald die Säge 4 nun den Kollisionsbereich mit den Fingern 13 vollständig verlassen hat, werden die Finger 13 der gabelartigen Abtransportvorrichtung 9 erfindungsgemäß über die Sägelinie 3 hinweg in die im Zuführbereich 7 angeordneten Abschnitte der nutförmigen Kanäle 14 vorgeschoben. Bei entsprechender Anordnung der Finger 13 ist dies auch bereits vor dem vollständigen Ende des Schnittvorgangs möglich, solange eben die Säge 4 nicht mehr mit den Fingern 13 kollidiert. Nach dem Abheben des Druckbalkens 18 ist dann die in Fig. 24 gezeigte Situation erreicht. Das Werkstückteil 10 und das Abfallstück 11 können nun auf den Fingern 13 liegend angehoben und von der gabelartigen Abtransportvorrichtung 9 in der Haupttransportrichtung 6 von der Sägelinie 3 abtransportiert werden. Um die Plattenaufteilanlage 1 möglichst effizient zu betreiben, sind die Geschwindigkeiten der Vorschubeinrichtung 15 und der gabelartigen Abtransportvorrichtung 9 so aufeinander abgestimmt, dass die Vorschubeinrichtung 15 bereits dann das nächste Werkstück 2 anliefert und mit sehr geringem Abstand zwischen der Vorderkante des Werkstücks 2 zu den Enden der Finger 13 der losfahrenden gabelartigen Abtransportvorrichtung 9 anordnet. Auch hierdurch werden Stillstandszeiten für die Säge 4 so weit wie möglich vermieden.

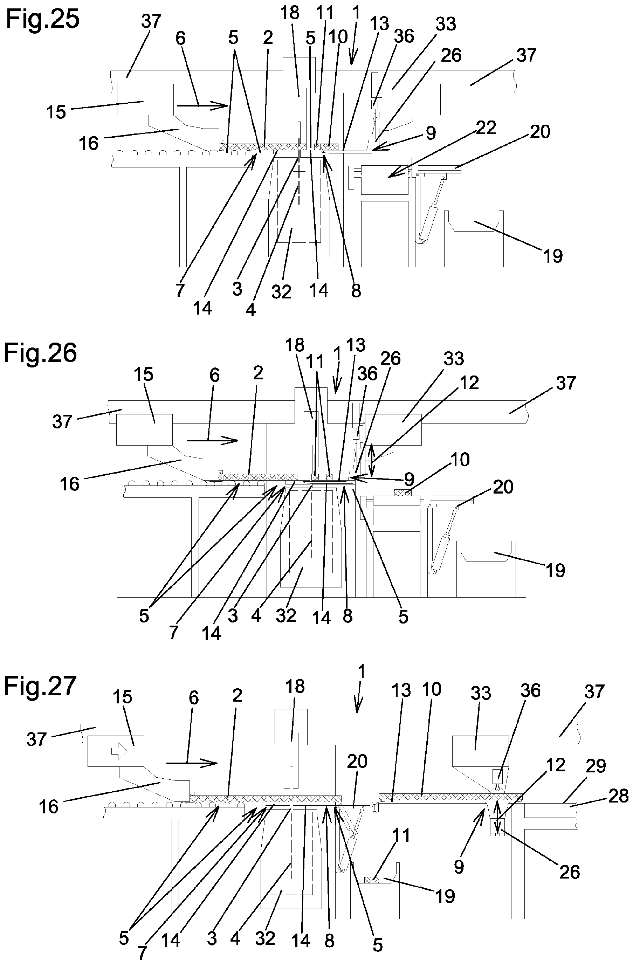

In Fig. 25 ist nun gezeigt, wie die gabelartige Abtransportvorrichtung 9 das Werkstückteil 10 und das Abfallstück 11 ein Stück weit von der Sägelinie 3 in der Haupttransportrichtung 6 wegtransportiert und auf dem Werkstückauflagetisch 5 wieder abgelegt hat, sodass die Vorschubeinrichtung 15 das nächste Werkstück 2 bereits für den ersten Schnitt bzw. Sägevorgang auf der Sägelinie 3 positionieren kann und trotzdem noch ein ausreichender Abstand zu den Enden der Finger 13 besteht, sodass die gabelartige Abtransportvorrichtung 9 das Werkstückteil 10 und das Abfallstück 11 gemeinsam auf dem Werkstückauflagetisch 5 ablegen kann. Im nächsten Schritt positioniert die gabelartige Abtransportvorrichtung 9 die Finger 13 in den nutförmigen Kanälen 14 so, dass sich nurmehr das Werkstückteil 10 über den Fingern 13 befindet, sodass nur das Werkstückteil 10 angehoben und auf den Fingern 13 liegend zur Querfördereinrichtung 22 transportiert und dort abgelegt werden kann. Anschließend kann die gabelartige Abtransportvorrichtung 9 mit ihren Fingern 13 in die nutförmigen Kanäle 14 wieder unter dem dort noch liegenden Abfallstück 11 bis kurz vor die Sägelinie 3 gefahren werden. Fig. 26 zeigt nun die Situation bei der vom nachfolgenden Werkstück 2 bereits ein Abfallstück 11 abgetrennt wurde. Sobald die Säge 4 den Kollisionsbereich mit den Fingern 13 vollständig verlassen hat, wird die gabelartige Abtransportvorrichtung 9 mit ihren Fingern 13 über die Sägelinie 3 hinweg so weit verfahren, dass beide in Fig. 26 dargestellte Abfallstücke 11 über den Fingern 13 angeordnet sind. Nun können durch entsprechendes Anheben der gabelartigen Abtransportvorrichtung 9 beide Abfallstücke 11 gleichzeitig auf den Fingern 13 liegend angehoben und der Abfallklappe 20 zugeführt und dort abgelegt werden, um anschließend durch entsprechendes Kippen der Abfallklappe 20 in die Abfallfördereinrichtung 19 geworfen zu werden.

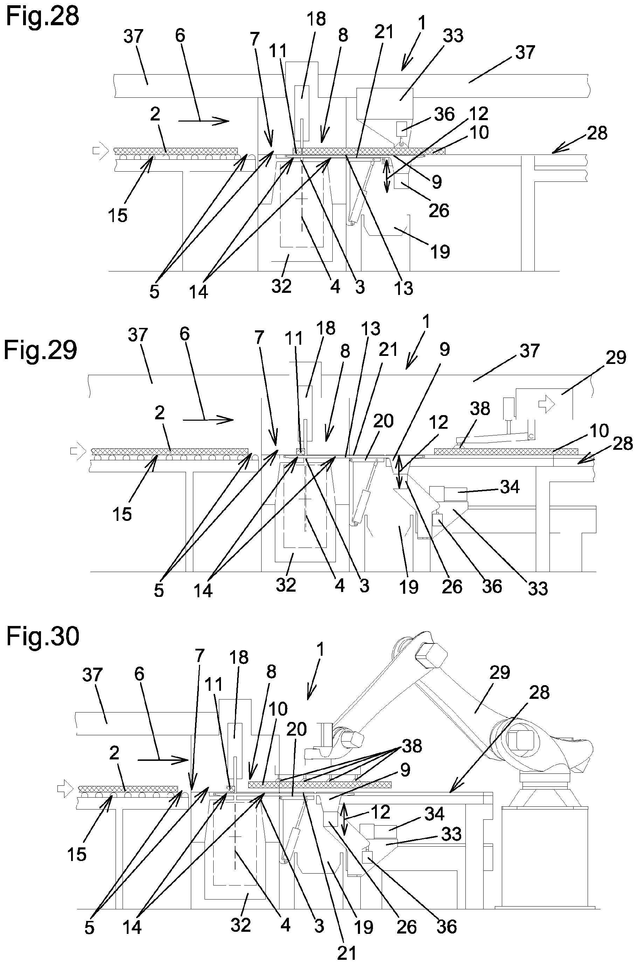

Die Fig. 27 und 28 zeigen nun das Zersägen des in Fig. 3 gezeigten streifenförmigen Werkstücks 2 mittels der Plattenaufteilanlage 1 des zweiten Ausführungsbeispiels, wobei nur die Unterschiede zu der Vorgehensweise, welche anhand der Fig. 21 bis 26 erläutert wurden, dargestellt und beschrieben sind. In Fig. 27 ist die Situation dargestellt, in der die ersten drei Schnitte bzw. Sägevorgänge an dem streifenförmigen Werkstück 2 aus Fig. 3 bereits ausgeführt sind. Das nach dem ersten Schnitt entstandene Abfallstück 11 wurde bereits von der gabelartigen Abtransportvorrichtung 9 auf der Abfallklappe 20 abgelegt und von dort in die Abfallfördereinrichtung 19 abgeworfen, wie dies anhand von Fig. 21 und 22 grundsätzlich beschrieben wurde. Das mit dem zweiten Schnitt bzw. Sägevorgang produzierte Werkstückteil 10 ist in Fig. 27 bereits abtransportiert und nicht mehr dargestellt. Das mit dem dritten Schnitt bzw. Sägevorgang produzierte Werkstückteil 10 wurde unmittelbar nach Schnittende und Anheben des Druckbalkens 18 mit den bereits unter dem Werkstück 2 vorpositionierten Fingern 13 angehoben und von der gabelartigen Abtransportvorrichtung 9 über die hier als Riemenförderer ausgebildete weitere Fördereinrichtung 29 transportiert. Dort wird es im nächsten Schritt abgelegt und vom Riemenförderer 29 abtransportiert. Gleichzeitig positioniert die Vorschubeinrichtung 15 den noch nicht zersägten Teil des Werkstücks 2 für den vierten Schnitt über der Sägelinie 3. Der in Fig. 28 gezeigte Verarbeitungsschritt entspricht der Fig. 24. Die Verarbeitungsschritte sind dieselben wie in den Fig. 25 und 26 beschrieben. Eine kleine Abweichung ergibt sich durch das wesentliche längere Werkstückteil 10 beim zur Fig. 25 beschriebenen gemeinsamen Ablegen von Werkstückteil 10 und Abfallstück 11. Hier kann nur das Abfallstück 11 auf dem Werkstückauflagetisch 5 abgelegt werden. Das Werkstückteil 10 wird aufgrund seiner Größe auf dem Werkstückauflagetisch 5 der Abfallklappe 20 und der weiteren Fördereinrichtung 29 in Form des Riemenförderers abgelegt. Dies ist bei dieser Variante der Plattenaufteilanlage 1 möglich, da all diese Bauteile auf demselben Höhenniveau angeordnet sind. Es ist auch ein alternativer Ablauf möglich, bei dem das zur Fig. 25 beschriebene gemeinsame Ablegen von Werkstück 10 und Abfallstück 11 so erfolgt, dass das Werkstückteil 10 auf der weiteren Fördereinrichtung 29, also dem Riemenförderer liegt und das Abfallstück 11 auf der Abfallklappe 20. Die gabelartige Abtransportvorrichtung 9 mit den Fingern 13 verfährt dann im auf das untere Höhenniveau abgesenkten Zustand weiter, bis die Finger 13 nicht mehr im Bereich der Abfallklappe 20 angeordnet sind und das Abfallstück 11 abgeworfen werden kann. Es folgt der weitere Ablauf wie zu den Fig. 25 und 26 beschrieben. Allerdings wird das vordere Abfallstück 11 des nächsten Werkstücks 2 einzeln abtransportiert. Insgesamt wird dadurch eine Hubbewegung mit der gabelartigen Abtransportvorrichtung 9 eingespart, wobei allerdings die Abfallklappe 20 zweimal öffnen muss. Bei dieser Ausführungsvariante der Plattenaufteilanlage 1 kann die gabelartige Abtransportvorrichtung 9 auch Werkstückteile 10 transportieren, die wesentlich länger als die Finger 13 sind. Die Werkstückteile 10 liegen dann im mittleren Bereich der Finger 13 auf und stehen an beiden Seiten entsprechend über. Bei entsprechend stabilem Werkstückmaterial können dadurch problemlos Werkstückteile 10 bis zur dreifachen Länge der Finger 13 transportiert werden. Einige Einschränkungen ergeben sich dann bei den Ablaufschritten, bei denen Werkstückteile 10 und Abfallstücke 11 gemeinsam transportiert werden. Dies ist bei beidseitig überhängenden Werkstückteilen 10 nicht möglich. Daher sind dann in diesem Fall zwei Transportbewegungen hintereinander erforderlich, eine für das Werkstückteil 10 und eine für das Abfallstück 11.

Die Fig. 29 zeigt denselben Bearbeitungsschritt wie die Fig. 24 und 28. Abweichend zu den Beschreibungen dazu, transportiert hier die gabelartige Abtransportvorrichtung 9 das Werkstückteil 10 und das Abfallstück 11 aber nicht gemeinsam ab. Es ist vielmehr vorgesehen, dass die hier gemäß des dritten Ausführungsbeispiels der erfindungsgemäßen Plattenaufteilanlage 1 als Ausziehwagen ausgestaltete weitere Fördereinrichtung 29 mit ihrer Vakuumgreifeinrichtung 38 das Werkstückteil 10 abtransportiert und das Abfallstück 11 mittels der gabelartigen Abtransportvorrichtung 9 abtransportiert wird. Besonders günstig sind hier bei dieser Ausführung Finger mit erhöhter Auflagefläche 30, wie in Fig. 20 dargestellt. Hierdurch kann die gabelartige Abtransportvorrichtung 9 Abfallstücke 11 oder Werkstücke 10 mit sehr geringem Abstand zu den von der weiteren Fördereinrichtung 29 transportierten Werkstückteilen 10 fördern.

Fig. 30 zeigt eine Abwandlungsform des dritten Ausführungsbeispiels der Plattenaufteilanlage 1 gemäß der Fig. 12 bis 15. In Abwandlung zu diesem Ausführungsbeispiel wird hier als weitere Fördereinrichtung 29 ein HandlingRoboter mit einer Vakuumgreifeinrichtung 38 zum Abtransport der Werkstückteile 10 verwendet. In dieser Ausgestaltungsform ist bevorzugt vorgesehen, dass die gabelartige Abtransportvorrichtung 9 im Wesentlichen zum Abtransport der Abfallstücke 11 eingesetzt wird. Es können auch zwei oder mehr solche Handlingroboter in diesem Bereich eingesetzt werden.

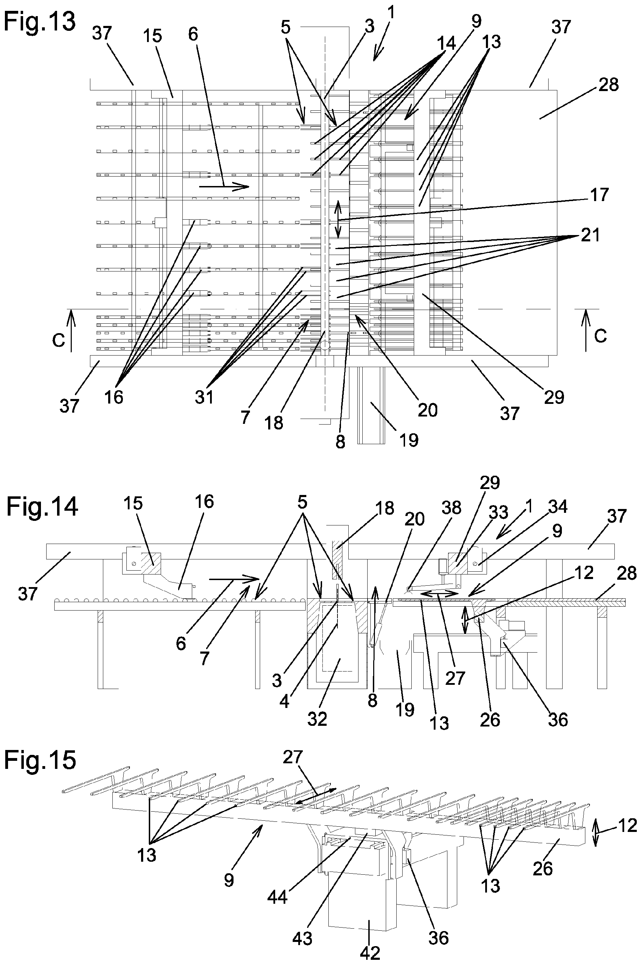

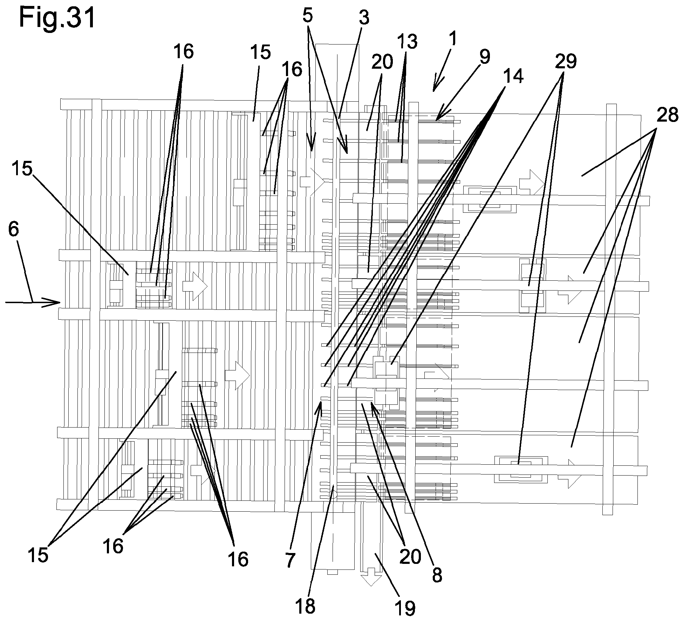

In Fig. 31 wird eine weiterentwickelte Variante des dritten Ausführungsbeispiels der Plattenaufteilanlage 1 gezeigt. Hier ist der Zuführbereich 7 in vier nebeneinander angeordnete Förderbereiche unterteilt. Jedem Förderbereich ist eine eigene Vorschubeinrichtung 15 mit entsprechenden Werkstückklemmern 16 zugeordnet. Im Abführbereich 8 hinter der Sägelinie 3 befinden sich entsprechend auch vier nebeneinander und unabhängig voneinander arbeitende weitere Fördereinrichtungen 29 in Form von Ausziehwagen mit Vakuumgreifeinrichtungen 38. Mit diesen können die Werkstückteile 10 auf dem z.B. als Bürstentisch oder Luftkissentisch ausgebildeten Werkstückteilabtransporttisch 28 abtransportiert werden. Entsprechend sind hier auch vier unabhängig voneinander operierende, unten liegende gabelartige Abtransportvorrichtungen 9 gemäß Fig. 14 und 15 vorgesehen. Es sind aber auch Ausführungen möglich, bei denen eine gabelartige Abtransportvorrichtung 9 zwei oder mehr der Förderbereiche abdeckt oder eine große gabelartige Abtransportvorrichtung 9 über die gesamte Länge der Sägelinie 3 eingebaut ist.

### Legende zu den Hinweisziffern:

| | | | |
|---|---|---|---|
| 1 | Plattenaufteilanlage | 28 | Werkstückteilabtransporttisch |
| 2 | Werkstück | | |
| 3 | Sägelinie | 29 | weitere Fördereinrichtung |
| 4 | Säge | | |
| 5 | Werkstückauflagetisch | 30 | Auflagefläche |
| 6 | Haupttransportrichtung | 31 | Klemmereinführschlitz |
| 7 | Zuführbereich | 32 | Sägewagen |
| 8 | Abführbereich | 33 | Tragbalken |
| 9 | gabelartige Abtransportvorrichtung | 34 | Tragbalkenantrieb |
| | | 35 | Rollen |
| 10 | Werkstückteil | 36 | Hubantrieb |
| 11 | Abfallstück | 37 | Führungsschienen |
| 12 | Richtung | 38 | Vakuumgreifeinrichtung |
| 13 | Finger | 39 | Teleskop |
| 14 | nutförmiger Kanal | 40 | Verschiebeantrieb |
| 15 | Vorschubeinrichtung | 41 | Materialfehler |
| 16 | Werkstückklemmer | 42 | Schienenführung |
| 17 | horizontale Richtung | 43 | Trägerantrieb |
| 18 | Druckbalken | 44 | Träger |
| 19 | Abfallfördereinrichtung | | |
| 20 | Abfallklappe | | |
| 21 | nutförmiger Kanal | | |
| 22 | Querfördereinrichtung | | |
| 23 | Querförderrichtung | | |
| 24 | Abstreifkamm | | |
| 25 | nutförmiger Kanal | | |
| 26 | Fingerträger | | |
| 27 | Richtung | | |

## Patentansprüche

1. Plattenaufteilanlage (1) zum Zersägen zumindest eines, aus einer Einzelplatte oder einem Plattenstapel bestehenden, Werkstücks (2), wobei die Plattenaufteilanlage (1) zum Zersägen des Werkstücks (2) eine entlang einer Sägelinie (3) verfahrbare Säge (4) und einen Werkstückauflagetisch (5) aufweist, wobei die Sägelinie (3) entlang des Werkstückauflagetisches (5) verläuft und die Plattenaufteilanlage (1), in einer Haupttransportrichtung (6) gesehen, einen Zuführbereich (7) vor der Sägelinie (3) und einen Abführbereich (8) hinter der Sägelinie (3) aufweist, wobei im Abführbereich (8) eine gabelartige Abtransportvorrichtung (9) für den Abtransport von zumindest einem, durch Zersägen des Werkstücks (2) entstandenen, Werkstücksteil (10) und/oder Abfallstück (11) angeordnet ist und die gabelartige Abtransportvorrichtung (9) zur Sägelinie (3) hin und von der Sägelinie (3) weg und in Richtungen (12) parallel zur Vertikalen, insbesondere motorisch angetrieben, verfahrbar gelagert ist und eine Vielzahl von parallel zueinander und beabstandet voneinander angeordneten, in sich längserstreckten Fingern (13) aufweist und wobei im Werkstückauflagetisch (5) im Abführbereich (8) nutförmige Kanäle (14) angeordnet sind, in die die Finger (13) einfahrbar sind, **dadurch gekennzeichnet, dass** sich die nutförmigen Kanäle (14) im Werkstückauflagetisch (5) vom Abführbereich (8), die Sägelinie (3) kreuzend, bis in den Zuführbereich (7) erstrecken und die Finger (13) in den nutförmigen Kanälen (14) vom Abführbereich (8), die Sägelinie (3) kreuzend, bis in den Zuführbereich (7) verfahrbar sind.

2. Plattenaufteilanlage (1) nach Anspruch 1, **dadurch gekennzeichnet, dass** die Plattenaufteilanlage (1) im Zuführbereich (7) eine Vorschubeinrichtung (15) mit Werkstückklemmern (16) zum Zuführen des zu zersägenden Werkstücks (2) in der Haupttransportrichtung (6) hin zur Sägelinie (3) aufweist, wobei vorzugsweise vorgesehen ist, dass Klemmereinführschlitze (31) im Werkstückauflagetisch (5) für die Werkstückklemmer (16) der Vorschubeinrichtung (15) in einer horizontalen Richtung (17) orthogonal zur Haupttransportrichtung (6) zu den Fingern (13) der gabelartigen Abtransportvorrichtung (9) versetzt angeordnet sind.

3. Plattenaufteilanlage (1) nach Anspruch 1 oder 2, **dadurch gekennzeichnet, dass** die Plattenaufteilanlage (1) einen Druckbalken (18) zum Andrücken des zu zersägenden Werkstücks (2) auf den Werkstückauflagetisch (5) im Bereich der Sägelinie (3) aufweist.

4. Plattenaufteilanlage (1) nach einem der Ansprüche 1 bis 3, **dadurch gekennzeichnet, dass** im Abführbereich (8) eine Abfallfördereinrichtung (19) zur Aufnahme und/oder zum Abtransport des zumindest einen Abfallstücks (11) angeordnet ist, wobei über der Abfallfördereinrichtung (19) eine schwenkbare Abfallklappe (20) angeordnet ist, welche ebenfalls nutförmige Kanäle (21), in die die Finger (13) einfahrbar sind, aufweist.

5. Plattenaufteilanlage (1) nach einem der Ansprüche 1 bis 4, **dadurch gekennzeichnet, dass** im Abführbereich (8), vorzugsweise unmittelbar an den Werkstückauflagetisch (5) anschließend, eine Querfördereinrichtung (22) zum Abtransportieren des durch das Zersägen des Werkstücks (2) entstandenen zumindest einen Werkstückteils (10) in einer Querförderrichtung (23) parallel zur Sägelinie (3) angeordnet ist.

6. Plattenaufteilanlage (1) nach Anspruch 5, **dadurch gekennzeichnet, dass** die Querfördereinrichtung (22) zwischen dem Werkstückauflagetisch (5) und der Abfallklappe (20) angeordnet ist und/oder als, vorzugsweise motorisch angetriebene, Rollenbahn ausgebildet ist.

7. Plattenaufteilanlage (1) nach Anspruche 5 oder 6, **dadurch gekennzeichnet, dass** auf der vom Werkstückauflagetisch (5) abgewandten Seite der Querfördereinrichtung (22) ein Abstreifkamm (24) zum Abstreifen des zumindest einen Werkstückteils (10) von den Fingern (13) angeordnet ist.

8. Plattenaufteilanlage (1) nach einem der Ansprüche 4 bis 7, **dadurch gekennzeichnet, dass** die Abfallklappe (20) und/oder die Querfördereinrichtung (22) auf einem tieferen Niveau als der Werkstückauflagetisch (5) angeordnet ist bzw. sind.

9. Plattenaufteilanlage (1) nach einem der Ansprüche 1 bis 8, **dadurch gekennzeichnet, dass** die nutförmigen Kanäle (14) im Werkstückauflagetisch (5), und gegebenenfalls auch die nutförmigen Kanäle (21) in der Abfallklappe (20) und/oder gegebenenfalls auch nutförmige Kanäle (25) in der Querfördereinrichtung (22), nach oben hin offen sind und die Finger (13) in vertikaler Richtung vollständig in den nutförmigen Kanälen (14, 21, 25) versenkbar sind.

10. Plattenaufteilanlage (1) nach einem der Ansprüche 1 bis 9, **dadurch gekennzeichnet, dass** die jeweils zueinander benachbart angeordneten Finger (13) in zumindest zwei voneinander verschiedenen Bereichen der gabelartigen Abtransportvorrichtung (9) unterschiedlich weit voneinander beabstandet angeordnet sind.

11. Plattenaufteilanlage (1) nach einem der Ansprüche 1 bis 10, **dadurch gekennzeichnet, dass** die gabelartige Abtransportvorrichtung (9) einen Fingerträger (26) aufweist, an dem die Finger (13) angeordnet sind.

12. Plattenaufteilanlage (1) nach Anspruch 11, **dadurch gekennzeichnet, dass** der Fingerträger (26) gemeinsam mit seinen Fingern (13) zur Sägelinie (3) hin und von der Sägelinie (3) weg und in den Richtungen (12) parallel zur Vertikalen, insbesondere motorisch angetrieben, verfahrbar gelagert ist und/oder dass die Finger (13) individuell oder in Gruppen relativ zum Fingerträger (26) in Richtung (27) ihrer Längserstreckung und/oder in den Richtungen (12) parallel zur Vertikalen, vorzugsweise motorisch angetrieben, verfahrbar und/oder, vorzugsweise motorisch angetrieben, teleskopierbar sind.

13. Plattenaufteilanlage (1) nach einem der Ansprüche 1 bis 12, **dadurch gekennzeichnet, dass** im Abführbereich (8) ein Werkstückteilabtransporttisch (28) der Plattenaufteilanlage (1) angeordnet ist, auf dem das durch das Zersägen des Werkstücks (2) entstandene, zumindest eine Werkstückteil (10) von der gabelartigen Abtransportvorrichtung (9) ablegbar ist.

14. Plattenaufteilanlage (1) nach Anspruch 13, **dadurch gekennzeichnet, dass** die Plattenaufteilanlage (1) im und/oder über dem Werkstückteilabtransporttisch (28) zusätzlich zur gabelartigen Abtransportvorrichtung (9) zumindest eine weitere Fördereinrichtung (29), vorzugsweise zwei weitere Fördereinrichtungen (29), zum weiteren Abtransport der Werkstückteile (10) zumindest in der Haupttransportrichtung (6) aufweist.

15. Plattenaufteilanlage (1) nach Anspruch 14, **dadurch gekennzeichnet, dass** die weitere Fördereinrichtung (29) oder zumindest eine der weiteren Fördereinrichtungen (29) ein Handlingroboter mit einer Vakuumgreifereinrichtung oder ein Ausziehwagen mit einer Vakuumgreifereinrichtung oder ein Ausziehwagen mit Schiebenocken ist.

16. Plattenaufteilanlage (1) nach einem der Ansprüche 1 bis 15, **dadurch gekennzeichnet, dass** die Finger (13) jeweils eine Auflagefläche (30) für die Werkstückteile (10) und/oder Abfallstücke (11) aufweisen, wobei vorzugsweise vorgesehen ist, dass die Auflagefläche (30) als eine Reiboberfläche und/oder als eine gezahnte Oberfläche und/oder als ein erhöhter Bereich einer stufenförmigen Oberfläche ausgebildet ist.

17. Verfahren zum Betrieb einer Plattenaufteilanlage (1) nach einem der Ansprüche 1 bis 16, **dadurch gekennzeichnet, dass** in zumindest einem Sägevorgang durch Zersägen des Werkstücks (2) mit der Säge (4) entlang der Sägelinie (3) zumindest ein Werkstückteil (10) und/oder zumindest ein Abfallstück (11) erzeugt wird und nach und/oder während diesem Sägevorgang die Finger (13) der gabelartigen Abtransportvorrichtung (9) in den nutförmigen Kanälen (14) des Werkstückauflagetisches (5) vom Abführbereich (8), die Sägelinie (3) kreuzend, bis in den Zuführbereich (7) verfahrbaren werden und anschließend das zumindest eine Werkstückteil (10) und/oder das zumindest eine Abfallstück (11) auf den Fingern (13) liegend von der gabelartigen Abtransportvorrichtung (9) in der Haupttransportrichtung (6) abtransportiert wird.

18. Verfahren nach Anspruch 17, **dadurch gekennzeichnet, dass** zumindest zwei Werkstückteile (10) und/oder Abfallstücke (11) von der gabelartigen Abtransportvorrichtung (9) im Abführbereich (8) auf dem Werkstückauflagetisch (5) abgelegt werden und anschließend nur eine Teilmenge dieser zumindest zwei Werkstückteile (10) und/oder Abfallstücke (11) auf den Fingern (13) liegend von der gabelartigen Abtransportvorrichtung (9) wieder angehoben und in der Haupttransportrichtung (6) abtransportiert wird und eine restliche Teilmenge dieser zumindest zwei Werkstückteile (10) und/oder Abfallstücke (11) daran anschließend auf den Fingern (13) liegend von der gabelartigen Abtransportvorrichtung (9) einzeln oder gemeinsam mit zumindest einem anderen Werkstückteil (10) und/oder Abfallstück (11) wieder angehoben und in der Haupttransportrichtung (6) abtransportiert wird.

19. Verfahren nach Anspruch 17 oder 18, **dadurch gekennzeichnet, dass** die Finger (13) oder zumindest einzelne der Finger (13) der gabelartigen Abtransportvorrichtung (9) bereits in einem Zeitintervall in den nutförmigen Kanälen (14) des Werkstückauflagetisches (5) vom Abführbereich (8), die Sägelinie (3) kreuzend, bis in den Zuführbereich (7) verfahren werden, während die Säge (4) in einem Bereich der Sägelinie (3) verfahren wird, in dem sich keine Finger (13) der gabelartigen Abtransportvorrichtung (9) während dieses Zeitintervalls befinden.

## Claims

1. A panel sizing installation (1) for sawing up at least one workpiece (2) consisting of an individual panel or a stack of panels, wherein the panel sizing installation (1), for sawing up the workpiece (2), has a saw (4) which is movable along a sawing line (3) and a workpiece support table (5), wherein the sawing line (3) runs along the workpiece support table (5), and the panel sizing installation (1), viewed in a main direction of transport (6), has a supply region (7) before the sawing line (3) and a removal region (8) after the sawing line (3), wherein a fork-like discharge device (9) for discharging at least one workpiece part (10) and/or waste piece (11) resulting from sawing up the workpiece (2) is arranged in the removal region (8), and the fork-like discharge device (9) is mounted movably, in particular in a motor-driven manner, towards the sawing line (3) and away from the sawing line (3) and in directions (12) parallel to the vertical, and has a large number of fingers (13) which are elongate in themselves and arranged parallel to each other and spaced apart from each other, and wherein in the workpiece support table (5) in the removal region (8) there are arranged groove-shaped channels (14) into which the fingers (13) can be introduced, **characterised in that** the groove-shaped channels (14) in the workpiece support table (5) extend from the removal region (8), crossing the sawing line (3), and into the supply region (7), and the fingers (13) are movable in the groove-shaped channels (14) from the removal region (8), crossing the sawing line (3), and into the supply region (7).

2. A panel sizing installation (1) according to claim 1, **characterised in that** the panel sizing installation (1) in the supply region (7) has a feed means (15) with workpiece clamps (16) for supplying the workpiece (2) which is to be sawn up in the main direction of transport (6) towards the sawing line (3), with provision preferably being made for clamp introduction slots (31) to be arranged in the workpiece support table (5) for the workpiece clamps (16) of the feed means (15) offset in relation to the fingers (13) of the fork-like discharge device (9) in a horizontal direction (17) orthogonally to the main direction of transport (6).

3. A panel sizing installation (1) according to claim 1 or 2, **characterised in that** the panel sizing installation (1) includes a pressure bar (18) for pressing the workpiece (2) which is to be sawn up onto the workpiece support table (5) in the region of the sawing line (3).

4. A panel sizing installation (1) according to one of claims 1 to 3, **characterised in that** a waste-conveying means (19) for receiving and/or discharging the at least one waste piece (11) is arranged in the removal region (8), with a pivotable waste flap (20) which likewise has groove-shaped channels (21) into which the fingers (13) can be introduced being arranged above the waste-conveying means (19).

5. A panel sizing installation (1) according to one of claims 1 to 4, **characterised in that** in the removal region (8), preferably following on directly from the workpiece support table (5), there is arranged a transverse conveying means (22) for discharging the at least one workpiece part (10) resulting from sawing up the workpiece (2) in a transverse conveying direction (23) parallel to the sawing line (3).

6. A panel sizing installation (1) according to claim 5, **characterised in that** the transverse conveying means (22) is arranged between the workpiece support table (5) and the waste flap (20) and/or is configured as a, preferably motor-driven, roller conveyor.

7. A panel sizing installation (1) according to claims 5 or 6, **characterised in that** on that side of the transverse conveying means (22) which faces away from the workpiece support table (5) there is arranged a stripping comb (24) for stripping the at least one workpiece part (10) from the fingers (13).

8. A panel sizing installation (1) according to one of claims 4 to 7, **characterised in that** the waste flap (20) and/or the transverse conveying means (22) is or are arranged at a lower level than the workpiece support table (5).

9. A panel sizing installation (1) according to one of claims 1 to 8, **characterised in that** the groove-shaped channels (14) in the workpiece support table (5), and optionally also the groove-shaped channels (21) in the waste flap (20) and/or optionally also groove-shaped channels (25) in the transverse conveying means (22), are open upwards and the fingers (13) in the vertical direction can be embedded completely in the groove-shaped channels (14, 21, 25).

10. A panel sizing installation (1) according to one of claims 1 to 9, **characterised in that** the fingers (13) which are arranged adjacent to each other in each case are arranged spaced apart at different distances from each other in at least two regions, which are different from each other, of the fork-like discharge device (9).

11. A panel sizing installation (1) according to one of claims 1 to 10, **characterised in that** the fork-like discharge device (9) has a finger carrier (26) on which the fingers (13) are arranged.

12. A panel sizing installation (1) according to claim 11, **characterised in that** the finger carrier (26) together with its fingers (13) is mounted to be movable, in particular in a motor-driven manner, towards the sawing line (3) and away from the sawing line (3) and in the directions (12) parallel to the vertical, and/or **in that** the fingers (13) are individually or in groups relative to the finger carrier (26) in the direction (27) of their longitudinal extent and/or in the directions (12) parallel to the vertical mounted to be movable, preferably in a motor-driven manner, and/or are mounted to be telescoped, in particular in a motor-driven manner.

13. A panel sizing installation (1) according to one of claims 1 to 12, **characterised in that** in the removal region (8) there is arranged a workpiece part discharge table (28) of the panel sizing installation (1) on which the at least one workpiece part (10) resulting from sawing up the workpiece (2) can be deposited by the fork-like discharge device (9).

14. A panel sizing installation (1) according to claim 13, **characterised in that** the panel sizing installation (1) in and/or above the workpiece part discharge table (28) in addition to the fork-like discharge device (9) has at least one further conveying means (29), preferably two further conveying means (29), for further transport of the workpiece parts (10) at least in the main direction of transport (6).

15. A panel sizing installation (1) according to claim 14, **characterised in that** the further conveying means (29) or at least one of the further conveying means (29) is a handling robot with a vacuum gripper means or an extraction carriage with a vacuum gripper means or an extraction carriage with sliding cam.

16. A panel sizing installation (1) according to one of claims 1 to 15, **characterised in that** the fingers (13) in each case have a supporting surface (30) for the workpiece parts (10) and/or waste pieces (11), with provision preferably being made for the supporting surface (30) to be configured as a friction surface and/or as a toothed surface and/or as a raised region of a step-shaped surface.

17. A method for operating a panel sizing installation (1) according to one of claims 1 to 16, **characterised in that** at least one workpiece part (10) and/or at least one waste piece (11) is produced in at least one sawing operation by sawing up the workpiece (2) with the saw (4) along the sawing line (3), and after and/or during this sawing operation the fingers (13) of the fork-like discharge device (9) are movable in the groove-shaped channels (14) of the workpiece support table (5) from the removal region (8), crossing the sawing line (3), and into the supply region (7), and then the at least one workpiece part (10) and/or the at least one waste piece (11) is/are discharged, lying on the fingers (13), by the fork-like discharge device (9) in the main direction of transport (6).

18. A method according to claim 17, **characterised in that** at least two workpiece parts (10) and/or waste pieces (11) are deposited on the workpiece support table (5) by the fork-like discharge device (9) in the removal region (8) and then only a partial quantity of these at least two workpiece parts (10) and/or waste pieces (11) is raised again, lying on the fingers (13), by the fork-like discharge device (9) and is discharged in the main direction of transport (6), and a remaining partial quantity of these at least two workpiece parts (10) and/or waste pieces (11), following on from this, lying on the fingers (13), is raised again by the fork-like discharge device (9) individually or together with at least one other workpiece part (10) and/or waste piece (11) and is discharged in the main direction of transport (6).

19. A method according to claim 17 or 18, **characterised in that** the fingers (13) or at least individual ones of the fingers (13) of the fork-like discharge device (9) already in a time interval are moved in the groove-shaped channels (14) of the workpiece support table (5) from the removal region (8), crossing the sawing line (3), and into the supply region (7), while the saw (4) is moved in a region of the sawing line (3) in which no fingers (13) of the fork-like discharge device (9) are located during this time interval.

## Revendications

1. Installation de découpe de plaques (1) pour scier au moins une pièce (2) constituée d'une plaque simple ou d'une pile de plaques, l'installation de découpe de plaques (1) étant munie, pour scier la pièce (2), d'une scie (4) déplaçable le long d'une ligne de sciage (3) et d'une table de support de pièce (5), la ligne de sciage (3) s'étendant le long de la table de support de pièce (5) et l'installation de découpe de plaques (1), vue dans une direction de transport principale (6), étant munie d'une zone d'alimentation (7) en amont de la ligne de sciage (3) et d'une zone de déchargement (8) en aval de la ligne de sciage (3), un dispositif d'évacuation (9) en forme de fourche étant disposé dans la zone de déchargement (8) pour l'évacuation d'au moins une partie de pièce (10) obtenue par sciage de la pièce (2) et/ou une chute (11), et le dispositif d'évacuation (9) en forme de fourche étant logé de manière à pouvoir être déplacé en direction de la ligne de sciage (3) et en s'éloignant de la ligne de sciage (3) et dans des directions (12) parallèles à la verticale, notamment en étant entraîné par un moteur, et étant muni d'une pluralité de doigts (13) s'étendant longitudinalement et disposés parallèlement les uns aux autres et à distance les uns des autres, et des canaux (14) en forme de rainures étant disposés dans la table de support de pièce (5) dans la zone de déchargement (8), dans lesquels les doigts (13) peuvent être rétractés, **caractérisée en ce que** les canaux en forme de rainure (14) s'étendent dans la table de support de pièce (5) depuis la zone de déchargement (8), en croisant la ligne de sciage (3), jusque dans la zone d'alimentation (7), et les doigts (13) peuvent être déplacés dans les canaux en forme de rainure (14) depuis la zone de déchargement (8), en croisant la ligne de sciage (3), jusque dans la zone d'alimentation (7).

2. Installation de découpe de plaques (1) selon la revendication 1, **caractérisée en ce que** l'installation de découpe de plaques (1) est munie dans la zone d'alimentation (7) d'un dispositif de déplacement vers l'avant (15) avec des pinces à pièces (16) pour amener la pièce (2) à scier dans la direction principale de transport (6) vers la ligne de sciage (3), des fentes d'introduction de pinces (31) étant de préférence prévues dans la table de support de pièces (5) pour les pinces de pièces (16) du dispositif de déplacement vers l'avant (15), lesquelles fentes sont disposées décalée, dans une direction horizontale (17) orthogonale à la direction de transport principale (6), par rapport aux doigts (13) du dispositif d'évacuation (9) en forme de fourche.

3. Installation de découpe de plaques (1) selon la revendication 1 ou 2, **caractérisée en ce que** l'installation de découpe de plaques (1) est munie d'une poutre de pression (18) pour presser la pièce (2) à scier sur la table de support de pièce (5) au niveau de la ligne de sciage (3).

4. Installation de découpe de plaques (1) selon l'une des revendications 1 à 3, **caractérisée en ce qu'**un dispositif de transport de chutes (19) est disposé dans la zone de déchargement (8) pour recevoir et/ou évacuer ladite au moins une chute (11), une trappe à chutes (20) pivotante étant disposée au-dessus du dispositif de transport de chutes (19), laquelle trappe est également munie de canaux (21) en forme de rainures dans lesquels les doigts (13) peuvent être rétractés.

5. Installation de découpe de plaques (1) selon l'une des revendications 1 à 4, **caractérisée en ce qu'**un dispositif de transport transversal (22) est disposé dans la zone de déchargement (8), de préférence directement à la suite de la table de support de pièces (5), pour évacuer dans une direction de transport transversal (23) parallèle à la ligne de sciage (3) ladite au moins une partie de pièce (10) obtenue par le sciage de la pièce (2).

6. Installation de découpe de plaques (1) selon la revendication 5, **caractérisée en ce que** le dispositif de transport transversal (22) est disposé entre la table de support de pièces (5) et la trappe de chutes (20) et/ou est conçu comme un convoyeur à rouleaux, de préférence entraîné par un moteur.

7. Installation de découpe de plaques (1) selon la revendication 5 ou 6, **caractérisée en ce qu'**un peigne de dégagement (24) est disposé sur le côté du dispositif de transport transversal (22) opposé à la table de support de pièces (5) pour dégager ladite au moins une partie de pièce (10) des doigts (13).

8. Installation de découpe de plaques (1) selon l'une des revendications 4 à 7, **caractérisée en ce que** la trappe à chutes (20) et/ou le dispositif de transport transversal (22) est ou sont disposés à un niveau inférieur à celui de la table de support de pièces (5).

9. Installation de découpe de plaques (1) selon l'une des revendications 1 à 8, **caractérisée en ce que** les canaux en forme de rainure (14) dans la table de support de pièces (5), et éventuellement aussi les canaux en forme de rainure (21) dans la trappe à chutes (20) et/ou éventuellement aussi les canaux en forme de rainure (25) dans le dispositif de transport transversal (22), sont ouverts vers le haut, et les doigts (13) peuvent être entièrement escamotés en direction verticale dans les canaux en forme de rainure (14, 21, 25).

10. Installation de découpe de plaques (1) selon l'une des revendications 1 à 9, **caractérisée en ce que** les doigts (13) disposés de façon adjacente les uns aux autres sont disposés à des distances différentes les uns des autres dans au moins deux zones différentes du dispositif d'évacuation (9) en forme de fourche.

11. Installation de découpe de plaques (1) selon l'une des revendications 1 à 10, **caractérisée en ce que** le dispositif d'évacuation (9) en forme de fourche est muni d'un support de doigts (26) sur lequel sont disposés les doigts (13).

12. Installation de découpe de plaques (1) selon la revendication 11, **caractérisée en ce que** le support de doigts (26) est logé en pouvant être déplacé conjointement avec ses doigts (13) en direction de la ligne de sciage (3) et en s'éloignant de la ligne de sciage (3) et dans les directions (12) parallèles à la verticale, notamment en étant entraîné par un moteur, et/ou **en ce que** les doigts (13) peuvent être déplacés individuellement ou par groupes par rapport au support de doigts (26) dans la direction (27) de leur extension longitudinale et/ou dans les directions (12) parallèles à la verticale, de préférence en étant entraînés par un moteur, et/ou peuvent être conçus télescopiques, de préférence en étant entraînés par un moteur.

13. Installation de découpe de plaques (1) selon l'une des revendications 1 à 12, **caractérisée en ce qu'**une table d'évacuation de pièces (28) de l'installation de découpe de plaques (1) est disposée dans la zone de déchargement (8), sur laquelle ladite au moins une partie de pièce (10) obtenue par sciage de la pièce (2) peut être déposée par le dispositif d'évacuation (9) en forme de fourche.

14. Installation de découpe de plaques (1) selon la revendication 13, **caractérisée en ce que** l'installation de découpe de plaques (1) est munie, dans et/ou au-dessus de la table d'évacuation de pièces (28), en plus du dispositif d'évacuation en forme de fourche (9), d'au moins un dispositif de transport (29) supplémentaire, de préférence de deux dispositifs de transport (29) supplémentaires, pour poursuivre l'évacuation des parties de pièces (10) au moins dans la direction principale de transport (6).

15. Installation de découpe de plaques (1) selon la revendication 14, **caractérisée en ce que** le dispositif de transport (29) supplémentaire ou au moins l'un des dispositifs de transport (29) supplémentaires est un robot de manipulation avec un dispositif de préhension par le vide, ou un chariot d'extraction avec un dispositif de préhension par le vide, ou un chariot d'extraction avec des cames de poussée.

16. Installation de découpe de plaques (1) selon l'une des revendications 1 à 15, **caractérisée en ce que** les doigts (13) sont munis chacun d'une surface d'appui (30) pour les parties de pièces (10) et/ou les chutes (11), de préférence il est prévu que la surface d'appui (30) soit réalisée sous la forme d'une surface de friction et/ou d'une surface dentée et/ou d'une zone surélevée d'une surface en gradins.

17. Procédé d'exploitation d'une installation de découpe de plaques (1) selon l'une des revendications 1 à 16, **caractérisé en ce que,** dans au moins une opération de sciage, au moins une partie de pièce (10) et/ou au moins une chute (11) est produite par sciage de la pièce (2) avec la scie (4) le long de la ligne de sciage (3) et, après et/ou pendant cette opération de sciage, les doigts (13) du dispositif d'évacuation (9) en forme de fourche sont déplacés dans les canaux en forme de rainure (14) de la table de support de pièces (5) de la zone de déchargement (8), en croisant la ligne de sciage (3), jusqu'à la zone d'alimentation (7), puis, ladite au moins une partie de pièce (10) et/ou ladite au moins une chute (11) est évacuée dans la direction principale de transport (6) par le dispositif d'évacuation (9) en forme de fourche en étant posée sur les doigts (13).

18. Procédé selon la revendication 17, **caractérisé en ce que en ce qu'**au moins deux parties de pièce (10) et/ou chutes (11) sont déposées par le dispositif d'évacuation (9) en forme de fourche sur la table de support de pièce (5) dans la zone de déchargement (8), puis seule une quantité partielle de ces dites au moins deux parties de pièce (10) et/ou chutes (11) est à nouveau soulevée par le dispositif d'évacuation (9) en forme de fourche en étant posée sur les doigts (13) et est évacuée dans la direction principale de transport (6) et une quantité partielle restante de ces dites au moins deux parties de pièce (10) et/ou déchets (11) est ensuite à nouveau soulevée, individuellement ou conjointement avec au moins une autre partie de pièce (10) et/ou chute (11), par le dispositif d'évacuation (9) en forme de fourche en reposant sur les doigts (13) et est évacuée dans la direction principale de transport (6).

19. Procédé selon la revendication 17 ou 18, **caractérisé en ce que** les doigts (13) du dispositif d'évacuation (9) en forme de fourche, ou au moins certains des doigts (13), sont déplacés dans les canaux en forme de rainure (14) de la table de support de pièce (5) de la zone de déchargement (8), en croisant la ligne de sciage (3), jusqu'à la zone d'alimentation (7), durant un intervalle de temps pendant lequel la scie (4) est déplacée dans une zone de la ligne de sciage (3) où aucun doigt (13) du dispositif d'évacuation (9) en forme de fourche ne se trouve durant cet intervalle de temps.
